# EUROPEAN PATENT APPLICATION

(11) **EP 4 848 436 A1**
(43) Date of publication of application: **02.12.2026**
(21) Application number: 25861721.6
(22) Date of filing: 26.03.2025
(51) Int. Cl.: H01M 50/244

(54) **BATTERY APPARATUS AND ELECTRICAL APPARATUS**

(71) Applicant: Contemporary Amperex Technology Co., Ltd., Ningde, Fujian 352100 (CN)
(72) Inventor: WEI, Jie, Ningde, Fujian 352100 (CN); ZHUANG, Tao, Ningde, Fujian 352100 (CN); WANG, Yong, Ningde, Fujian 352100 (CN); GAO, Jian, Ningde, Fujian 352100 (CN); KE, Qingpeng, Ningde Fujian 352100 (CN); PAN, Xin, Ningde Fujian 352100 (CN)
(74) Representative: Gong, Jinping
(86) International application number: PCT/CN2025/085007
(87) International publication number: WO 2026/199225

(57) **Abstract**

The present application discloses a battery apparatus and an electrical apparatus, belonging to the technical field of batteries. The battery apparatus comprises a box body, a battery cell, a protective plate, and a first fastener. The battery cell is arranged in the box body. The protective plate is arranged at bottom of the battery cell, with at least one side of the protective plate along thickness direction thereof being a fiber resin layer. The first fastener is configured to lock the protective plate to the box body, wherein a part of the protective plate is clamped between the box body and the first fastener along the thickness direction of the protective plate. A supporting member is further arranged between the box body and the first fastener along the thickness direction of the protective plate, and orthographic projection of the supporting member does not overlap with orthographic projection of the protective plate in a given projection plane perpendicular to the thickness direction of the protective plate. The above battery apparatus has high reliability.

## Description

### TECHNICAL FIELD

The present application relates to the technical field of batteries, and specifically relates to a battery apparatus and an electrical apparatus.

### BACKGROUND

With energy saving and emission reduction being the key to the sustainable development of the automobile industry, electric vehicles have become an important part of the sustainable development of automotive industry due to their advantages of energy saving and environmental protection. For the electric vehicles, the battery technology is another important factor regarding the development thereof.

How to improve the reliability of battery apparatuses is a problem to be urgently solved in the battery technology.

### SUMMARY OF THE INVENTION

In view of the above problems, the present application provides a battery apparatus and an electrical apparatus, which can improve the reliability of the battery apparatus.

In a first aspect, the present application provides a battery apparatus, comprising a box body, a battery cell, a protective plate, and a first fastener. The battery cell is arranged in the box body. The protective plate is arranged at bottom of the battery cell, with at least one side of the protective plate along thickness direction thereof being a fiber resin layer. The first fastener is configured to lock the protective plate to the box body, wherein a part of the protective plate is clamped between the box body and the first fastener along the thickness direction of the protective plate. A supporting member is further arranged between the box body and the first fastener along the thickness direction of the protective plate, and orthographic projection of the supporting member does not overlap with orthographic projection of the protective plate in a given projection plane perpendicular to the thickness direction of the protective plate.

In a technical solution of an embodiment of the present application, the supporting member is arranged between the box body and the first fastener along the thickness direction of the protective plate, and its orthographic projection does not overlap with the orthographic projection of the protective plate in the given projection plane perpendicular to the thickness direction of the protective plate. Such an arrangement can function for mechanical adjustment without affecting compactness of the overall structure of the electrical apparatus. When a locking force of the first fastener is transmitted to the protective plate, the supporting member can restrict deformation amount of the fiber resin layer being compressed, reduce the risk of matrix cracking or fiber breakage due to excessive compression of the fiber resin layer, and reduce the risk of the protective function loss of the protective plate caused by the fiber resin layer collapse, thereby improving the reliability of the electrical apparatus.

In one or more embodiments of the first aspect, the battery apparatus further comprises a second fastener fixed to the box body and threadedly connected to the first fastener.

In the above solutions, the protective plate is locked to the box body by the second fastener threadedly connected to the first fastener, which, on the one hand, is conducive to reducing the risk of excessive deformation of the box body caused by local stress concentration of the box body, on the other hand, is conducive to improving the machining efficiency of the electrical apparatus because of no need to machine high-precision threads in the box body in the process of manufacturing the box body, and on still another hand, can reduce the risk of scrapping the entire box body due to thread failure, and is conducive to reducing the maintenance costs of the electrical apparatus. In addition, two fasteners can synergistically function to reduce the pre-tightening force required for locking the protective plate, further reduce the risk of the matrix cracking or fiber breakage due to excessive compression of the fiber resin layer, and further reduce the risk of the protective function loss of the protective plate caused by the fiber resin layer collapse.

In one or more embodiments of the first aspect, the supporting member is arranged between the first fastener and the second fastener along the thickness direction of the protective plate.

In the above solutions, since a locking force between the first fastener and the second fastener is relatively large, the supporting member is arranged between the first fastener and the second fastener, to restrict the deformation amount of the fiber resin layer being compressed in a region with a large locking force, and further reduce the risk of damaging the fiber resin layer.

In one or more embodiments of the first aspect, the box body comprises a frame and a beam body, wherein the beam body is arranged in the frame and connected to the frame. The first fastener comprises a nut, the second fastener comprises a first sleeve, at least a part of the first sleeve is arranged in the beam body, and the nut is sleeved on outer peripheral side of the first sleeve and threadedly connected to the first sleeve. The supporting member comprises a first supporting member arranged between the nut and the first sleeve.

In the above solutions, by sleeving the nut on the outer peripheral side of the first sleeve and locking the protective plate in cooperation with the sleeve, internal space of the sleeve can be fully utilized to implement subsequent assembly steps such as mounting the box body, thereby expanding the functions of the first fastener and the second fastener, reducing the number of sealing operations during the assembly process, and reducing the risk of sealing failure of the box body.

In one or more embodiments of the first aspect, the protective plate has a first surface and a second surface that are oppositely arranged along the thickness direction of the protective plate, the protective plate has a first through hole, the first through hole runs through the first surface and the second surface, and the first supporting member is arranged in the first through hole.

In the above solutions, the first supporting member can utilize space inside the first through hole, so that the electrical apparatus is more compact, which is conducive to making the battery apparatus have a high energy density. In addition, the first through hole can be used as an assembly basis for the first fastener, the second fastener, and the supporting member, which is conducive to improving the assembly efficiency.

In one or more embodiments of the first aspect, the protective plate comprises a first fiber resin layer, a reinforcement layer, and a second fiber resin layer sequentially stacked along the thickness direction thereof, and a first edge sealing portion; along the thickness direction of the protective plate, a surface of the first fiber resin layer away from the reinforcement layer is the first surface, and a surface of the second fiber resin layer away from the reinforcement layer is the second surface; the reinforcement layer has a second through hole arranged around the first through hole, the first edge sealing portion is annular, outer peripheral surface of the first edge sealing portion is connected to inner peripheral surface of the second through hole and connects the first fiber resin layer to the second fiber resin layer, and the first supporting member is arranged through the first edge sealing portion.

In the above solutions, the first edge sealing portion can reduce the risk of the reinforcement layer being exposed, corroded or damaged. Since the first supporting member is arranged through the first edge sealing portion, when the locking force of the first fastener is transmitted to the protective plate, the first supporting member can restrict the deformation amount of the first edge sealing portion being compressed, and reduce the risk of the protective function loss thereof caused by collapse of the first edge sealing portion, thereby improving the reliability of the electrical apparatus.

In one or more embodiments of the first aspect, material of the first edge sealing portion comprises a resin or a fiber resin.

In one or more embodiments of the first aspect, the first supporting member is integrally formed with the nut.

In the above solutions, the integrally formed first supporting member and nut can simplify the assembly process, improve the assembly efficiency, and further reduce the risk of damaging the fiber resin layer due to excessive displacement of the first supporting member in the assembly process.

In one or more embodiments of the first aspect, the first supporting member is annular, and inner diameter of the first supporting member is larger than inner diameter of the nut.

In the above solutions, the inner diameter of the first supporting member is larger than the inner diameter of the nut, thereby improving shape consistency of the thread tail end, improving the thread machining accuracy, and reducing the risk of generating assembling clearance due to low thread machining accuracy.

In one or more embodiments of the first aspect, the first sleeve comprises a sleeve body and a flange portion, the flange portion protrudes from outer peripheral surface of the sleeve body, and a part of the protective plate and the first supporting member are each located between the flange portion and the nut along the thickness direction of the protective plate.

In the above solutions, in the process of locking the protective plate, there is a large locking force between the flange portion and the nut, and the flange portion and the nut compress the protective plate, thereby resulting in a high risk of damaging the fiber resin layer. The first supporting member is arranged between the flange portion and the nut, to restrict the deformation amount of the fiber resin layer being compressed in a region with a large locking force, and further reduce the risk of damaging the fiber resin layer.

In one or more embodiments of the first aspect, the battery apparatus further comprises an annular first sealing member arranged between the flange portion and the protective plate.

In the above solutions, the arrangement of the first sealing member can improve the sealing performance between the flange portion and the protective plate.

In one or more embodiments of the first aspect, the flange portion has a first end surface facing the protective plate and provided with a first groove, and the first sealing member is arranged in the first groove.

In the above solutions, the first groove can restrict the deformation of the first sealing member, which is conducive to enabling the first sealing member to have sufficient compression amount after assembly, to provide high sealing performance between the flange portion and the protective plate.

In one or more embodiments of the first aspect, the first groove extends to outer peripheral surface of the flange portion.

In the above solutions, since the first groove extends to the outer peripheral surface of the flange portion, the first groove can have a larger accommodating space to accommodate the first sealing member, which is conducive to the arrangement of a first sealing member with a larger width, thereby further improving the sealing performance between the flange portion and the protective plate. When the first sealing member is located between the fiber resin layer and the flange portion, the first sealing member with a wider sealing width can significantly reduce the risk of sealing failure caused by high surface roughness of the fiber resin layer.

In one or more embodiments of the first aspect, depth of the first groove is H, satisfying: 1 mm≤H≤3 mm.

In the above solutions, when H≥1 mm, the first groove has a larger depth, which can reduce the risk of damaging the first sealing member due to excessive compression; when H≤3 mm, the first groove has a smaller depth, which can reduce the risk of sealing failure caused by failure to form sufficient compression deformation of the first sealing member; and therefore, 1 mm≤H≤3 mm not only reduces the risk of damaging the first sealing member due to excessive compression, but also can reduce the risk of sealing failure caused by failure to form sufficient compression deformation of the first sealing member.

In one or more embodiments of the first aspect, outer diameter of the first sealing member is D₁, and inner diameter of the first sealing member is D₂, satisfying: $5 mm \leq \frac{{D}_{1} - {D}_{2}}{2} \leq 12 mm$.

In the above solutions, $\frac{{D}_{1} - {D}_{2}}{2} \geq 5 mm$ can enable the first sealing member to have a high sealing width, and improve the sealing performance between the flange portion and the protective plate; 12 mm can reduce friction area of the first sealing member, and reduce the risk of fatigue failure of the first sealing member; and therefore, $5 mm \leq \frac{{D}_{1} - {D}_{2}}{2} \leq 12 mm$ not only improves the sealing performance between the flange portion and the protective plate, but also can reduce the friction area of the first sealing member, and reduce the risk of fatigue failure of the first sealing member.

In one or more embodiments of the first aspect, the first sealing member has a third surface in contact with the flange portion and a fourth surface in contact with the protective plate, and when the first sealing member is in a natural state, the third surface and the fourth surface are each a plane.

In the above solutions, the third surface and the fourth surface are each a plane when the first sealing member is in the natural state, which can reduce the pressure required to enable the sealing surface of the first sealing member to have sufficiently tight fitting, thereby reducing the risk of damaging the fiber resin layer due to excessive compression when an excessively large force is transmitted to the protective plate.

In one or more embodiments of the first aspect, compression rate of the first sealing member is Yb, satisfying: 30%≤Yb≤70%.

In the above solutions, Yb≥30% achieves highly tight fitting of the first sealing member and better sealing performance between the flange portion and the protective plate; Yb≤70% can reduce the risk of collapsing the first sealing member; and therefore, 30%≤Yb≤70% can further reduce the risk of collapsing the first sealing member while achieving better sealing performance between the flange portion and the protective plate. In one or more embodiments of the first aspect, the box body further comprises a thermal management component configured to carry the battery cell; the protective plate is located on one side of the thermal management component away from the battery cell along the thickness direction of the protective plate, the flange portion is located between the protective plate and the thermal management component; and the battery apparatus further comprises an annular second sealing member arranged between the flange portion and the thermal management component. The inner diameter of the first sealing member is larger than outer diameter of the second sealing member.

In the above solutions, the arrangement of the second sealing member can improve the sealing performance between the flange portion and the thermal management component. Since the inner diameter of the first sealing member is larger than the outer diameter of the second sealing member, the first sealing member is farther away from the first fastener, and the first sealing member can be set to have a larger sealing width, which is conducive to further improving the sealing performance between the flange portion and the protective plate. In particular, under the premise that orthographic projection of the first sealing member does not overlap with orthographic projection of the second sealing member along the thickness direction of the protective plate, such a setting can enable the first sealing member to be set to have a sealing width as large as possible.

In one or more embodiments of the first aspect, neither the nut nor the first sleeve exceeds a surface of the protective plate away from the battery cell along the thickness direction of the protective plate.

In the above solutions, since neither the nut nor the first sleeve exceeds the surface of the protective plate away from the battery cell along the thickness direction of the protective plate, a low risk of locking failure is caused by the nut and the first sleeve being subjected to an external force.

In one or more embodiments of the first aspect, the box body comprises a frame; the protective plate comprises a body and a flange edge, the flange edge is arranged around the body, the first fastener comprises a first screw, the first screw connects the flange edge to the frame, the supporting member comprises a second supporting member, and the second supporting member is arranged between the flange edge and the frame.

In the above solutions, when a locking force of the first screw is transmitted to the protective plate, the second supporting member can restrict deformation amount of the fiber resin layer being compressed, reduce the risk of the matrix cracking or fiber breakage due to excessive compression of the fiber resin layer, and reduce the risk of the protective function loss of the protective plate caused by the fiber resin layer collapse, thereby improving the reliability of the battery apparatus.

In one or more embodiments of the first aspect, the first screw comprises a nut cap and a screw rod, the second supporting member is sleeved on outer peripheral side of the screw rod, and the second supporting member is located between the nut cap and the frame along the thickness direction of the protective plate.

In the above solutions, in the process of locking the protective plate, there is a large locking force between the nut cap and the frame, and the nut cap and the frame compress the protective plate, thereby resulting in a high risk of damaging the fiber resin layer. The second supporting member is arranged between the nut cap and the frame, to restrict the deformation amount of the fiber resin layer being compressed in a region with a large locking force, and further reduce the risk of damaging the fiber resin layer.

In one or more embodiments of the first aspect, the protective plate has a first surface and a second surface that are oppositely arranged along the thickness direction of the protective plate, the protective plate has a third through hole, the third through hole runs through the first surface and the second surface, and the second supporting member is arranged in the third through hole.

In the above solutions, the second supporting member can utilize space inside the third through hole, so that the electrical apparatus is more compact, which is conducive to making the battery apparatus have a high energy density. In addition, the third through hole can be used as an assembly basis for the first fastener, the second fastener, and the second supporting member, which is conducive to improving the assembly efficiency of the battery apparatus.

In one or more embodiments of the first aspect, the second supporting member is an open ring.

In the above solutions, since the second supporting member is an open ring and is a flexible structure, the open ring can expand or contract in the process of locking the first screw, to scatter certain locking force, thereby further reducing the risk of damaging the fiber resin layer.

In one or more embodiments of the first aspect, in the thickness direction of the protective plate, thickness of the open ring is larger than the thickness of the protective plate.

In the above solutions, since the thickness of the open ring is larger than the thickness of the protective plate, the risk of damaging the fiber resin layer can be further reduced.

In one or more embodiments of the first aspect, the battery apparatus further comprises a third sealing member arranged between the flange edge and the box body.

In the above solutions, the arrangement of the third sealing member can improve the sealing performance between the flange edge and the box body.

In one or more embodiments of the first aspect, a plurality of the third through holes are arranged at intervals along circumferential direction of the flange edge, and a distance between two adjacent third through holes is L₁, satisfying: 70 mm≤L₁≤90 mm.

In the above solutions, when L₁≥70 mm, there is large spacing between two adjacent third through holes, which can reduce the risk of collapsing the third sealing member due to excessively large compressive stress; when L₁≤90 mm, there is small spacing between two adjacent third through holes, which can reduce the risk of sealing failure caused by warping of the third sealing member; and therefore, 70 mm≤L₁≤90 mm not only reduces the risk of collapsing the third sealing member caused by excessively large compressive stress, but also can reduce the risk of sealing failure caused by warping of the third sealing member.

In one or more embodiments of the first aspect, the flange edge comprises a first sub-flange edge and a second sub-flange edge that are adjacent, the first sub-flange edge has a first outer edge, and the second sub-flange edge has a second outer edge; the plurality of third through holes are arranged, comprising a plurality of first sub-through holes arranged on the first sub-flange edge and a plurality of second sub-through holes arranged on the second sub-flange edge; a distance between one of the plurality of first sub-through holes closest to the second outer edge and the second outer edge is L₂, satisfying: 20 mm≤L₂≤35 mm; and a distance between one of the plurality of second sub-through holes closest to the first outer edge and the first outer edge is L₃, satisfying: 20 mm≤L₃≤35 mm.

In the above solutions, when L₂≥20 mm, there is a large distance between the one of the plurality of first sub-through holes closest to the second outer edge and the second outer edge, so that a third sealing member with a large area can be arranged between the one of the plurality of first sub-through holes closest to the second outer edge and the second outer edge, thereby reducing the risk of collapsing the third sealing member after being locked because the third sealing member is set to have a small area; when L₂≤35 mm, there is a small distance between the one of the plurality of first sub-through holes closest to the second outer edge and the second outer edge, thereby reducing the risk of warping of the third sealing member with a large distance between the one of the plurality of first sub-through holes closest to the second outer edge and the second outer edge; and therefore, 20 mm≤L₂≤35 mm not only reduces the risk of collapsing the third sealing member after being locked because the third sealing member is set to have a small area, but also can reduce the risk of warping of the third sealing member with a large distance between the one of the plurality of first sub-through holes closest to the second outer edge and the second outer edge.

When L₃≥20 mm, there is a large distance between the one of the plurality of second sub-through holes closest to the first outer edge and the first outer edge, so that a third sealing member with a large area can be arranged between the one of the plurality of second sub-through holes closest to the first outer edge and the first outer edge, thereby reducing the risk of collapsing the third sealing member after being locked because the third sealing member is set to have a small area; when L₂≤35 mm, there is a small distance between the one of the plurality of second sub-through holes closest to the first outer edge and the first outer edge, thereby reducing the risk of warping of the third sealing member with a large distance between the one of the plurality of second sub-through holes closest to the first outer edge and the first outer edge; and therefore, 20 mm≤L₂≤35 mm not only reduces the risk of collapsing the third sealing member after being locked because the third sealing member is set to have a small area, but also can reduce the risk of warping of the third sealing member with a large distance between the one of the plurality of second sub-through holes closest to the first outer edge and the first outer edge.

In one or more embodiments of the first aspect, the third sealing member is annular and is provided with a third through hole for the first screw to run through, and a minimum distance between the third through hole and inner circumferential surface of the third sealing member is W, satisfying: 7 mm≤W≤10 mm.

In the above solutions, when W≥7 mm, the third sealing member has a large sealing width, which can reduce the risk of sealing failure; when W≤10 mm, the third sealing member occupies a small space, which is conducive to making the battery apparatus have a high energy density; and therefore, when 7 mm≤W≤10 mm, the battery apparatus can have both high sealing performance and a high energy density.

In one or more embodiments of the first aspect, the first fastener comprises a first screw, the battery apparatus further comprises a second fastener, the second fastener comprises a threaded sleeve threadedly connected to the first screw, at least a part of the threaded sleeve is arranged in the frame; the supporting member comprises a second supporting member, and the second supporting member is arranged between the first screw and the threaded sleeve. In the above solutions, by locking the protective plate through cooperation of the threaded sleeve and the first screw at least partially arranged in the frame, the locking force can be more uniformly transmitted to the frame through the threaded sleeve, thereby reducing the risk of locking failure caused by stress concentration.

In one or more embodiments of the first aspect, the protective plate comprises the first fiber resin layer, the reinforcement layer, and the second fiber resin layer sequentially stacked along the thickness direction thereof, and a second edge sealing portion; wherein the reinforcement layer has a fifth surface and a sixth surface that are opposite along thickness direction thereof and an outer peripheral surface connecting the fifth surface to the sixth surface, the second edge sealing portion is cladded on the outer peripheral surface of the reinforcement layer and connects the first fiber resin layer to the second fiber resin layer, and the second supporting member is arranged through the second edge sealing portion.

In the above solutions, the second edge sealing portion can reduce the risk of the reinforcement layer being exposed, corroded or damaged. Since the second supporting member is arranged through the second edge sealing portion, when the locking force of the first fastener is transmitted to the protective plate, the second supporting member can restrict the deformation amount of the second edge sealing portion being compressed, and reduce the risk of the protective function loss thereof caused by collapse of the second edge sealing portion, thereby improving the reliability of the battery apparatus.

In one or more embodiments of the first aspect, material of the second edge sealing portion comprises a resin or a fiber resin.

In one or more embodiments of the first aspect, material of the reinforcement layer comprises at least one of steel, titanium, ceramic, and high-strength plastic.

In one or more embodiments of the first aspect, the box body comprises a frame and a beam body, the beam body is arranged in the frame and connected to the frame, the protective plate comprises a body and a flange edge, the flange edge is arranged around the body; the first fastener comprises a nut and a first screw, the battery apparatus further comprises a second fastener, the second fastener comprises a first sleeve and a threaded sleeve; at least a part of the first sleeve is arranged in the beam body, the nut is sleeved on outer peripheral side of the first sleeve and threadedly connected to the first sleeve; at least a part of the threaded sleeve is arranged in the frame, the threaded sleeve is threadedly connected to the first screw; the supporting member comprises a first supporting member and a second supporting member, the first supporting member is arranged between the nut and the first sleeve, and the second supporting member is arranged between the flange edge and the frame.

In the above solutions, when a locking force of the nut is transmitted to the protective plate, and a locking force of the first screw is transmitted to the protective plate, the first supporting member and the second supporting member can restrict deformation amount of the fiber resin layer being compressed, reduce the risk of the matrix cracking or fiber breakage due to excessive compression of the fiber resin layer, and reduce the risk of the protective function loss of the protective plate caused by the fiber resin layer collapse, thereby improving the reliability of the battery apparatus. In a second aspect, the present application provides an electrical apparatus, comprising the battery apparatus in one or more of the above embodiments. The battery apparatus is configured to provide electric energy.

In the above solutions, since the battery apparatus in one or more of the above embodiments has high reliability, the electrical apparatus comprising the battery apparatus in one or more of the above embodiments further has high reliability.

The above description merely provides an overview of the technical solutions of the present application. In order to more clearly understand the technical means of the present application, the present application may be implemented based on the contents of the specification, and in order to make other objectives, features, and advantages of the present application more obvious and understandable, detailed description of the present application is listed below.

### DESCRIPTION OF DRAWINGS

By reading the detailed description of the preferred embodiments below, various other advantages and benefits will become apparent to those of ordinary skill in the art. The drawings are used for the purpose of illustrating the preferred embodiments only and are not to be considered a limitation to the present application. Moreover, in all of the drawings, like reference numerals represent like components. In the drawings:
FIG. 1 is a schematic structural diagram of a vehicle in some embodiments of the present application;
FIG. 2 is an exploded view of a battery apparatus in some embodiments of the present application;
FIG. 3 is a schematic structural diagram of a protective plate in some embodiments of the present application;
FIG. 4 is an exploded view of a protective plate in some embodiments of the present application;
FIG. 5 is a section view of a partial structure of a battery apparatus in some embodiments of the present application;
FIG. 6 is a partial enlarged view of A in FIG. 5;
FIG. 7 is a schematic structural diagram of a second fastener in some embodiments of the present application;
FIG. 8 is a structural schematic diagram of a first fastener in some embodiments of the present application;
FIG. 9 is a section view of a thermal management component in some embodiments of the present application;
FIG. 10 is a section view of a partial structure of a battery apparatus in some other embodiments of the present application;
FIG. 11 is a partial enlarged view of B in FIG. 10;
FIG. 12 is a section view of a partial structure of a battery apparatus in some other embodiments of the present application;
FIG. 13 is a partial enlarged view of C in FIG. 12;
FIG. 14 is a partial enlarged view of D in FIG. 4;
FIG. 15 is a partial enlarged view of E in FIG. 3;
FIG. 16 is a partial enlarged view of F in FIG. 3; and
FIG. 17 is a schematic structural diagram of a partial structure of a battery apparatus in some other embodiments of the present application.

Reference numerals in the Detailed Description are as follows:
1000-Vehicle; 200-Controller; 300-Motor; 100-Battery apparatus; 11-Box body; 111-First box body; 112-Second box body; 113-Frame; 114-Beam body; 12-Battery cell; 13-Protective plate; 131-First fiber resin layer; 132-Second fiber resin layer; 133-Interlayer; 134-First surface; 135-Second surface; 136-First through hole; 137-Body; 138-Flange edge; 1381-First sub-flange edge; 1381a-First outer edge; 1382-Second sub-flange edge; 1382a-Second outer edge; 139-Third through hole; 1391-First sub-through hole; 1392-Second sub-through hole; 1311-First edge sealing portion; 1312-Second edge sealing portion; 14-First fastener; 141-Nut; 142-First screw; 1421-Nut cap; 1422-Screw rod; 143-Second screw; 15-Supporting member; 151-First supporting member; 152-Second supporting member; 16-Second fastener; 161-First sleeve; 1612-Sleeve body; 1613-Flange portion; 1613a-First end surface; 1613b-First groove; 162-threaded sleeve; 17-First sealing member; 171-Third surface; 172-Fourth surface; 18-Thermal management component; 181-First plate body; 182-Second plate body; 19-Second sealing member; 20-Second sleeve; 21-Third sealing member; X-Thickness direction of protective plate.

### DETAILED DESCRIPTION

Embodiments of the technical solutions of the present application will be described in detail below with reference to the accompanying drawings. The following embodiments are only used to more clearly illustrate the technical solutions of the present application, therefore only as examples, and cannot be used to limit the scope of protection of the present application.

Unless otherwise defined, all technical and scientific terms used herein have the same meanings as those commonly understood by those skilled in the art to which the present application pertains to. The terms used herein are for the purpose of describing specific embodiments only and are not intended to limit the present application. The terms "including" and "having" and any variations thereof in the specification and claims of the present application and the aforementioned BRIEF DESCRIPTION OF DRAWINGS are intended to cover non-exclusive inclusion.

In the description of the embodiments of the present application, the technical terms "first", "second", etc., are used only to distinguish between different objects and are not to be understood as indicating or implying a relative importance or implicitly specifying the number, particular order, or primary and secondary relationship of the technical features indicated. In the description of the embodiments of the present application, the meaning of "a plurality of" is two or more, unless otherwise explicitly and specifically defined.

Reference herein to "an embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the examples of the present application, the term "plurality" refers to more than two (including two). Similarly, "a plurality of groups" refers to more than two groups (including two groups), and "a plurality of sheets" refers to more than two sheets (including two sheets).

In the embodiments of the present application, the battery cell may be a secondary battery. The secondary battery refers to a battery cell that, after being discharged, can activate an active material by charging for continued use.

The battery cell includes but is not limited to a lithium-ion battery, a sodium-ion battery, a sodium/lithium-ion battery, a lithium metal battery, a sodium metal battery, a lithiumsulfur battery, a magnesium-ion battery, a nickel-hydrogen battery, a nickel-cadmium battery, a lead storage battery and the like.

The battery cell generally includes an electrode assembly. The electrode assembly includes a positive electrode, a negative electrode and a spacer. During charge-discharge of the battery cell, active ions (e.g., lithium ions) are intercalated and de-intercalated back and forth between the positive electrode and the negative electrode. The spacer is arranged between the positive electrode and the negative electrode, and can function to reduce a risk of short circuit between the positive electrode and the negative electrode, while allowing active ions to pass through.

In some embodiments, the spacer is a separator. Any well-known separator with a porous structure having good chemical stability and mechanical stability can be selected as the separator.

In some embodiments, the spacer is a solid electrolyte. The solid electrolyte is arranged between the positive electrode and the negative electrode, and plays roles in transmitting ions and isolating the positive electrode from the negative electrode.

In some embodiments, the battery cell further includes an electrolyte, and the electrolyte plays a role in conducting ions between the positive electrode and the negative electrode. The electrolyte may be liquid, gel or solid. The liquid electrolyte includes an electrolyte salt and a solvent.

In some embodiments, the electrode assembly is a wound structure. The positive electrode plate and the negative electrode plate are wound into the wound structure.

In some embodiments, the electrode assembly is a stacked structure.

In some implementations, the shape of the electrode assembly may be a cylinder, a flat shape, a polygon prism, or the like.

In some embodiments, the electrode assembly is provided with tabs that can conduct current out from the electrode assembly. The tabs include a positive tab and a negative tab.

As an example, the battery cell may be a cylindrical battery cell, a prismatic battery cell, a pouch cell, or a battery cell of other shapes. The prismatic battery cell includes a battery cell of a square shell, a blade-shaped battery cell, and a polygonal prismatic battery cell. The polygonal prismatic battery cell is, for example, a hexagonal prismatic battery cell, etc.

The battery mentioned in the embodiments of the present application refers to a single physical module comprising one or more battery cells to provide higher voltage and capacity.

The Battery Apparatus mentioned in the embodiments of the present application may comprise one or more battery cell assemblies for providing voltage and capacity. The Battery Cell Assembly may comprise a plurality of battery cells, and the plurality of battery cells are connected by series connection, or parallel connection, or parallel-series connection through a bus component.

In some embodiments, the Battery Cell Assembly is generally formed by arranging the plurality of battery cells. As an example, the Battery Cell Assembly may be a Battery Module, which is an independent module formed by arranging and fixing the plurality of battery cells. As an example, the battery module may be formed by bundling the plurality of battery cells with cable ties.

In some embodiments, the battery apparatus may be a battery pack. The battery pack comprises a box body and one or more battery cell assemblies. The battery cell assembly is accommodated in the box body.

As an example, the battery cell assembly may be a battery module, and the battery cell assembly may be accommodated in the box body by fixing the battery module in the box body.

As an example, the battery cell assembly may also be accommodated in the box body by directly fixing the plurality of battery cells to the box body.

In some embodiments, the box body may be a part of a vehicle chassis structure. For example, a part of the box body may become at least a part of a vehicle floor, or a part of the box body may become at least a part of a cross beam and a longitudinal beam of a vehicle.

In some embodiments, the battery may be an energy storage apparatus. The energy storage apparatus comprises, e.g., an energy storage container or an energy storage cabinet.

The description will be provided below mainly around a rectangular battery cell. It should be understood that the embodiments described below are also applicable to a cylindrical battery cell or a pouch cell or a blade battery cell in some aspects.

In a common battery cell structure, the battery cell comprises a shell, an electrode assembly, and an electrolyte solution. The shell comprises an end cover and a case, and the end cover closes opening of the case to define an accommodating space for accommodating the electrode assembly. In some embodiments, the shell may be, e.g., a steel shell, an aluminum shell, a plastic shell (such as polypropylene), a composite metal shell (such as a copper-aluminum composite shell), or an aluminum-plastic film.

For the development of battery technologies, various design factors should be considered, such as energy density, cycle life, discharge capacity, charging-discharging rate, and other performance parameters. In addition, the reliability of the battery apparatus should also be considered.

A common battery apparatus generally comprises a box body and a protective plate, wherein the protective plate is configured to close an opening on the box body. The above protective plate mainly functions to prevent the impact and scratch of gravel, and can further effectively reduce the risk of invasion of foreign substances such as rainwater, mud, or dust, inside the box body, thereby reducing the risk of causing a short circuit or electrochemical corrosion. The protective plate in some battery apparatuses is provided with a fiber resin layer, which has excellent wear resistance and corrosion resistance. However, if a too large pre-tightening force is applied in the process of fixing the protective plate to the box body by a fastener, it may cause excessive compression of the fiber resin layer, and then result in the risk of matrix cracking or fiber breakage, etc., or even seriously cause the fiber resin layer to be collapsed, so that the protective plate loses due protective function thereof. Therefore, the above battery apparatus has certain defects in terms of reliability.

In view of this, the present application provides a battery apparatus, comprising a box body, a battery cell, a protective plate, and a first fastener. The battery cell is arranged in the box body. The protective plate is arranged at bottom of the battery cell, with at least one side of the protective plate along thickness direction thereof being a fiber resin layer. The first fastener is configured to lock the protective plate to the box body, wherein a part of the protective plate is clamped between the box body and the first fastener along the thickness direction of the protective plate. A supporting member is further arranged between the box body and the first fastener along the thickness direction of the protective plate, and orthographic projection of the supporting member does not overlap with orthographic projection of the protective plate in a given projection plane perpendicular to the thickness direction of the protective plate. The supporting member is arranged between the box body and the first fastener along the thickness direction of the protective plate, and its orthographic projection does not overlap with the orthographic projection of the protective plate in the given projection plane perpendicular to the thickness direction of the protective plate. Such an arrangement can function for mechanical adjustment without affecting compactness of the overall structure of the electrical apparatus. When a locking force of the first fastener is transmitted to the protective plate, the supporting member can restrict deformation amount of the fiber resin layer being compressed, reduce the risk of the matrix cracking or fiber breakage due to excessive compression of the fiber resin layer, and reduce the risk of the protective function loss of the protective plate caused by the fiber resin layer collapse, thereby improving the reliability of the electrical apparatus.

The technical solutions described in the embodiments of the present application are applicable to a battery cell, a battery apparatus, and an electrical apparatus using the battery apparatus.

The electrical apparatus includes, but is not limited to: a battery cart, an electric vehicle, a ship, and a spacecraft, etc. For example, the spacecraft includes, e.g., an airplane, a rocket, a space shuttle, and a spacecraft.

For ease of description, the following embodiments are illustrated when the electrical apparatus in an embodiment of the present application is, for example, a vehicle.

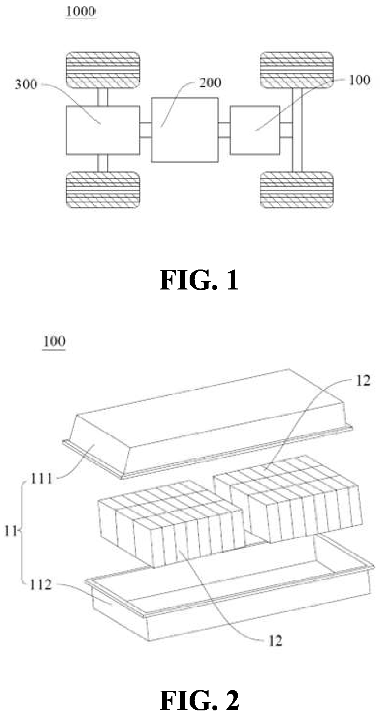

For example, FIG. 1 is a schematic structural diagram of a vehicle 1000 in some embodiments of the present application. The vehicle 1000 may be a fuel vehicle, a gas vehicle, or a new-energy vehicle. The new-energy vehicle may be, e.g., an all-electric vehicle, a hybrid electric vehicle, or an extended range electric vehicle. A motor 300, a controller 200, and a battery apparatus 100 may be provided inside the vehicle 1000. The controller 200 is configured to control the battery apparatus 100 to power the motor 300. For example, the battery apparatus 100 may be provided at the bottom, vehicle head, or vehicle rear of the vehicle 1000. The battery apparatus 100 may be configured to power the vehicle 1000. For example, the battery apparatus 100 may serve as an operating power source for the vehicle 1000 for a circuit system of the vehicle 1000, for example, for the working power requirements of the vehicle 1000 during startup, navigation, and running. In another embodiment of the present application, the battery apparatus 100 not only can serve as an operating power source of the vehicle 1000, but also can serve as a driving power source of the vehicle 1000, to provide driving power for the vehicle 1000 in place of or partially in place of fuel or natural gas.

In order to satisfy different power requirements, the battery apparatus 100 may comprise a plurality of battery cells 12, wherein the plurality of battery cells 12 may be connected by series connection, or parallel connection, or parallel-series connection, wherein the parallel-series connection refers to a combination of series connection and parallel connection. The battery apparatus 100 may also be referred to as a battery pack. Optionally, the plurality of battery cells 12 may first form battery cell 12 assemblies through series connection, parallel connection, or parallel-series connection. Then, a plurality of battery cell 12 assemblies may form the battery apparatus 100 through series connection, parallel connection, or parallel-series connection. That is, the plurality of battery cells 12 may directly form the battery apparatus 100, or may first form the battery cell 12 assemblies, and then the battery cell 12 assemblies may form the battery apparatus 100.

For example, referring to FIG. 2, FIG. 2 is an exploded view of a battery apparatus 100 in some embodiments of the present application, and the battery apparatus 100 may comprise a plurality of battery cells 12. The battery apparatus 100 may further comprise box bodies 11 with a hollow structure inside each of the box bodies 11, and the plurality of battery cells 12 are accommodated in the box bodies 11. As shown in FIG. 2, they are referred to as a first box body 111 and a second box body 112 respectively, and the first box body 111 and the second box body 112 are buckled together. Shapes of the first box body 111 and the second box body 112 can be determined based on the shape of a combination of the plurality of battery cells 12, and each of the first box body 111 and the second box body 112 can have an open surface. For example, each of the first box body 111 and the second box body 112 may be a hollow cuboid and has only one surface being an open surface, the open surface of the first box body 111 and the open surface of the second box body 112 are oppositely arranged, and the first box body 111 and the second box body 112 are mutually buckled to form a box body 11 with a closed cavity. The plurality of battery cells 12 are mutually combined by parallel connection, or series connection, or parallel-series connection, and then placed in the box body 11 formed by buckling the first box body 111 and the second box body 112.

Optionally, the battery apparatus 100 may further comprise other structures, which will not be repeated one by one here. For example, the battery apparatus 100 may further comprise a bus component configured to implement electrical connection, such as parallel connection, or series connection, or parallel-series connection, among the plurality of battery cells 12. Specifically, the bus component can implement the electrical connection among the battery cells 12 by connecting electrode terminals of the battery cells 12. Further, the bus component can be fixed to the electrode terminals of the battery cells 12 by welding. Electric energy of the plurality of battery cells 12 can be further led out through the box bodies 11 through a conductive mechanism.

Based on different power requirements, the number of battery cells 12 can be set as any value. The plurality of battery cells 12 can be connected by series connection, parallel connection, or parallel-series connection to achieve large capacity or power. Since a large number of battery cells 12 may be included in each battery apparatus 100, for ease of installation, the battery cells 12 may be arranged in groups, and the battery cells 12 in each group may constitute a battery cell 12 assembly. The number of battery cells 12 included in the battery cell 12 assembly is not limited, and may be set as required. The battery apparatus 100 may comprise a plurality of battery cell assemblies, which can be connected by series connection, parallel connection, or parallel-series connection.

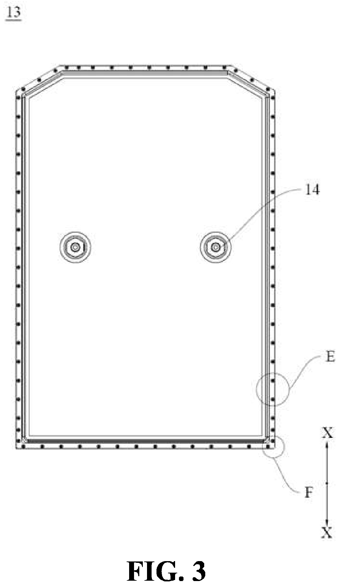

According to some embodiments of the present application, referring to FIGS. 3-6, the present application provides a battery apparatus 100. The battery apparatus 100 comprises a box body 11, a battery cell 12, a protective plate 13, and a first fastener 14. The battery cell 12 is arranged in the box body 11. The protective plate 13 is arranged at bottom of the battery cell 12, with at least one side of the protective plate 13 along thickness direction thereof being a fiber resin layer. The first fastener 14 is configured to lock the protective plate 13 to the box body 11 and clamp a part of the protective plate 13 between the box body 11 and the first fastener 14 along the thickness direction X of the protective plate. A supporting member 15 is further arranged between the box body 11 and the first fastener 14 along the thickness direction X of the protective plate, and orthographic projection of the supporting member 15 does not overlap with orthographic projection of the protective plate 13 in a given projection plane perpendicular to the thickness direction X of the protective plate.

In some embodiments, when an electrical apparatus is, for example, a vehicle 1000, the bottom of the battery cell 12 may refer to one side of the box body 11 close to the ground after the battery apparatus 100 is installed on the vehicle 1000.

In some embodiments, the protective plate 13 is arranged at the bottom of the battery cell 12, and the protective plate 13 is configured to carry the battery cell 12.

In some embodiments, the protective plate 13 is arranged at the bottom of the battery cell 12, a supporting plate is further provided between the protective plate 13 and the battery cell 12, and the supporting plate is configured to carry the battery cell 12. In some other embodiments, the supporting plate may be a thermal management component 18.

At least one side of the protective plate 13 along the thickness direction thereof is a fiber resin layer, which means that the protective plate 13 is provided with a fiber resin layer on one side or both sides along the thickness direction thereof. When the protective plate 13 is entirely made of a fiber resin material, it can also be understood that at least one side of the protective plate 13 along the thickness direction thereof is a fiber resin layer. Of course, in some embodiments, along the thickness direction X of the protective plate, the protective plate 13 comprises a first fiber resin layer 131, an interlayer 133, and a second fiber resin layer 132 that are stacked along the thickness direction thereof, and such a protective plate 13 can also be understood as that at least one side of the protective plate 13 along the thickness direction thereof is a fiber resin layer. In addition, the protective plate 13 comprises a first fiber resin layer 131 and a reinforcement layer that are stacked along the thickness direction thereof, and the first fiber resin layer 131 is located between the reinforcement layer and the battery cell 12; or the protective plate 13 comprises a reinforcement layer and a second fiber resin layer 132 that are stacked along the thickness direction thereof, and the second fiber resin layer 132 is located on one side of the reinforcement layer away from the battery cell 12; and such a protective plate 13 can also be understood as that at least one side of the protective plate 13 along the thickness direction thereof is a fiber resin layer. The interlayer 133 may comprise a reinforcement layer and a buffer layer, the reinforcement layer has a first surface 134 and a second surface 135 that are oppositely arranged along the thickness direction thereof, and at least a part of the first surface 134 and at least a part of the second surface 135 are connected to the buffer layer; the interlayer 133 may comprise the buffer layer and the reinforcement layer, both sides of the reinforcement layer are connected to the first fiber resin layer 131 and the second fiber resin layer 132 respectively, the buffer layer has an upper surface and a lower surface that are opposite, and the upper surface is connected to the first fiber resin layer 131, and/or the lower surface is connected to the second fiber resin layer 132; and the interlayer 133 may comprise the buffer layer and the reinforcement layer, the reinforcement layer comprises a first connecting portion and a second connecting portion, the first connecting portion is connected to both the first fiber resin layer 131 and the second fiber resin layer 132, the second connecting portion is connected to one of the first fiber resin layer 131 and the second fiber resin layer 132, the buffer layer has an upper surface and a lower surface that are oppositely arranged along the thickness direction X of the protective plate, the upper surface is connected to the first fiber resin layer 131, and/or the lower surface is connected to the second fiber resin layer 132.

In some embodiments, the first fiber resin layer 131 is independently selected from a glass fiber reinforced polyamide resin member, a glass fiber reinforced polypropylene resin member, a glass fiber reinforced polyethylene resin member, a glass fiber reinforced polycarbonate resin member, or a glass fiber reinforced polystyrene resin member; and/or the second fiber resin layer 132 is independently selected from a glass fiber reinforced polyamide resin member, a glass fiber reinforced polypropylene resin member, a glass fiber reinforced polyethylene resin member, a glass fiber reinforced polycarbonate resin member, or a glass fiber reinforced polystyrene resin member.

In some embodiments, the first fiber resin layer 131 comprises a first fiber-reinforced prepreg in a plurality of mutually stacked layers; and/or the second fiber resin layer 132 comprises a second fiber-reinforced prepreg in a plurality of mutually stacked layers.

In some embodiments, material of the buffer layer comprises at least one of a balsa wood, a honeycomb, a rubber, a foam material, and hard polyurethane.

In some embodiments, material of the reinforcement layer comprises at least one of steel, titanium, ceramic, and high-strength plastic.

In some embodiments, the protective plate 13 may further comprise the reinforcement layer. Along the thickness direction X of the protective plate, the reinforcement layer may be located on one side of the first fiber resin layer 131 away from the second fiber resin layer 132, the reinforcement layer may be located between the first fiber resin layer 131 and the second fiber resin layer 132, or the reinforcement layer may be located on one side of the second fiber resin layer 132 away from the first fiber resin layer 131. The material of the reinforcement layer may be independently selected from a glass fiber reinforced polyamide resin member, a glass fiber reinforced polypropylene resin member, a glass fiber reinforced polyethylene resin member, a glass fiber reinforced polycarbonate resin member, or a glass fiber reinforced polystyrene resin member. The reinforcement layer may also be made of a resin.

In some embodiments, the first fastener 14 may be, e.g., a nut 141, a screw, or a sleeve structure.

In some embodiments, the first fastener 14 may be a flow drill screw.

In some embodiments, material of the first fastener 14 may comprise, e.g., a metal or a plastic or a fiber reinforced composite material. Of course, the material of the first fastener 14 may also be a composite material, for example, a metal matrix with the addition of a ceramic coating, etc.

In some embodiments, a second fastener 16 is pre-installed in the box body 11, and the protective plate 13 is locked to the box body 11 through cooperation of the first fastener 14 and the second fastener 16, which can also be understood as that a part of the protective plate 13 is clamped between the box body 11 and the first fastener 14.

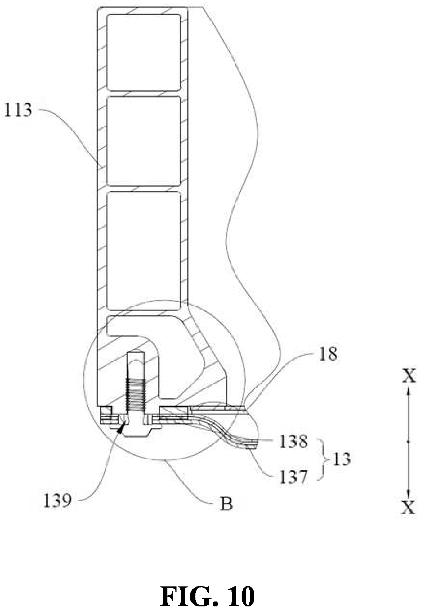

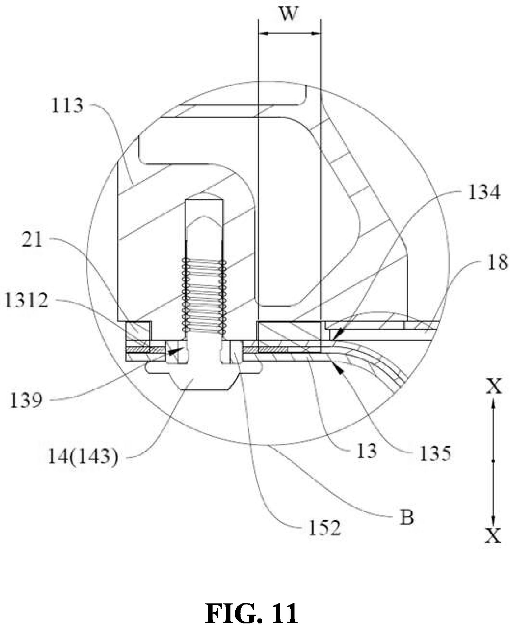

In some embodiments, as shown in FIGS. 10 and 11, a threaded hole is provided in the box body 11, the first fastener 14 comprises a second screw 143, the second screw 143 is threadedly connected to the threaded hole, and the supporting member 15 is arranged between the second screw 143 and a surface of the box body 11 facing the protective plate 13. In some other embodiments, the box body 11 comprises a frame 113, and the threaded hole is arranged on a surface of the frame 113 facing the protective plate 13.

In some embodiments, the thickness direction X of the protective plate is parallel to the gravity direction.

Material of the box body 11 may include, but is not limited to, a metal. In an embodiment where the material of the box body 11 includes a metal, the material of the box body 11 may include, but is not limited to, an aluminum alloy, a steel, or the like.

Material of the supporting member 15 may include, but is not limited to, a metal. In an embodiment where the material of the supporting member 15 includes a metal, the material of the supporting member 15 may include, but is not limited to, an aluminum alloy, a steel, or the like.

In some embodiments, the supporting member 15 is arranged between the first fastener 14 and the box body 11 along the thickness direction X of the protective plate.

A supporting member 15 is further arranged between the box body 11 and the first fastener 14 along the thickness direction X of the protective plate, and orthographic projection of the supporting member 15 does not overlap with orthographic projection of the protective plate 13 in a given projection plane perpendicular to the thickness direction X of the protective plate, which means that when a locking force of the first fastener 14 is transmitted to the protective plate 13, the supporting member 15 can restrict the deformation amount of the fiber resin layer being compressed. In other words, the presence of the supporting member 15 can restrict the first fastener 14 from further over-compressing the fiber resin layer after pressing the supporting member 15.

In some embodiments, the protective plate 13 is provided with a through hole, and the orthographic projection of the supporting member 15 is located in the through hole in the given projection plane perpendicular to the thickness direction X of the protective plate. In some other embodiments, the protective plate 13 comprises a first part, a second part, and a connecting portion connecting the first part to the second part. The connecting portion, the first part, and the second part jointly define a channel, the above channel runs through a portion of the first fastener 14 which locks the protective plate 13 to the box body 11, and the orthographic projection of the supporting member 15 is located in the channel in the given projection plane perpendicular to the thickness direction X of the protective plate.

In a technical solution of an embodiment of the present application, the supporting member 15 is arranged between the box body 11 and the first fastener 14 along the thickness direction X of the protective plate, and its orthographic projection does not overlap with the orthographic projection of the protective plate 13 in the given projection plane perpendicular to the thickness direction X of the protective plate. Such an arrangement can function for mechanical adjustment without affecting compactness of the overall structure of the electrical apparatus. When the locking force of the first fastener 14 is transmitted to the protective plate 13, the supporting member 15 can restrict deformation amount of the fiber resin layer being compressed, reduce the risk of matrix cracking or fiber breakage due to excessive compression of the fiber resin layer, and reduce the risk of the protective function loss of the protective plate 13 caused by the fiber resin layer collapse, thereby improving the reliability of the electrical apparatus.

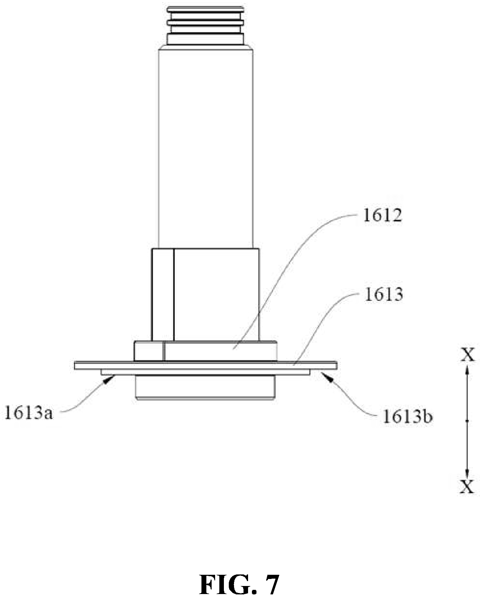

According to some embodiments of the present application, referring to FIGS. 3-8, the battery apparatus 100 further comprises a second fastener 16, the second fastener 16 is fixed to the box body 11, and the second fastener 16 is threadedly connected to the first fastener 14.

In some embodiments, the second fastener 16 may be, e.g., a nut 141, a screw, or a sleeve structure.

In some embodiments, material of the second fastener 16 may comprise, e.g., a metal, a plastic, or a fiber-reinforced composite material. Of course, the material of the second fastener 16 may also be a composite material, for example, a metal matrix with the addition of a ceramic coating, etc.

The second fastener 16 may be fixed to the box body 11 by, e.g., welding, threaded connection, or snap fit.

In the above solutions, the protective plate 13 is locked to the box body 11 by the second fastener 16 threadedly connected to the first fastener 14, which, on the one hand, is conducive to reducing the risk of excessive deformation of the box body 11 caused by local stress concentration of the box body 11, on the other hand, is conducive to improving the machining efficiency of the electrical apparatus because of no need to machine high-precision threads in the box body 11 in the process of manufacturing the box body 11, and on still another hand, can reduce the risk of scrapping the entire box body 11 due to thread failure, and is conducive to reducing the maintenance costs of the electrical apparatus. In addition, two fasteners can synergistically function to reduce the pre-tightening force required for locking the protective plate 13, further reduce the risk of the matrix cracking or fiber breakage due to excessive compression of the fiber resin layer, and further reduce the risk of the protective function loss of the protective plate 13 caused by the fiber resin layer collapse.

According to some embodiments of the present application, referring to FIGS. 3-8, the supporting member 15 is arranged between the first fastener 14 and the second fastener 16 along the thickness direction X of the protective plate.

Along the thickness direction X of the protective plate, the supporting member 15 is arranged between the first fastener 14 and the second fastener 16, which can be understood as that the supporting member 15 abuts against both the first fastener 14 and the second fastener 16, and of course, can also be understood as that the supporting member 15 and the first fastener 14 and/or the second fastener 16 are arranged at intervals along the thickness direction X of the protective plate and are located between the first fastener 14 and the second fastener 16. For example, a buffer structure can be additionally provided between the first fastener 14 and the supporting member 15.

In the above solutions, since a locking force between the first fastener 14 and the second fastener 16 is relatively large, the supporting member 15 is arranged between the first fastener 14 and the second fastener 16, to restrict the deformation amount of the fiber resin layer being compressed in a region with a large locking force, and further reduce the risk of damaging the fiber resin layer.

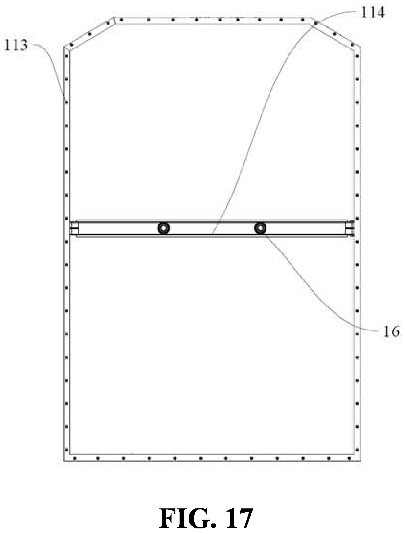

According to some embodiments of the present application, referring to FIGS. 3-8 and 17, the box body 11 comprises a frame 113 and a beam body 114, and the beam body 114 is arranged in the frame 113 and connected to the frame 113. The first fastener 14 comprises a nut 141, the second fastener 16 comprises a first sleeve 161, at least a part of the first sleeve 161 is arranged in the beam body 114, and the nut 141 is sleeved on outer peripheral side of the first sleeve 161 and threadedly connected to the first sleeve 161. The supporting member 15 comprises a first supporting member 151, and the first supporting member 151 is arranged between the nut 141 and the first sleeve 161.

In some embodiments, the frame 113 comprises a plurality of side beams, the plurality of side beams are connected end to end and arranged around the protective plate 13, and the beam body 114 may be one of the side beams.

In some embodiments, at least one partition beam is arranged in the frame 113, and the partition beam partitions internal space of the box body 11 into a first compartment and a second compartment. The first compartment and the second compartment can be configured to accommodate at least one battery cell assembly among a plurality of battery cell assemblies, and, of course, can also be configured to accommodate, e.g., an electronic control module. The beam body 114 may be a partition beam.

In some embodiments, inner side of the nut 141 is provided with an internal thread, the outer peripheral side of the first sleeve 161 is provided with an external thread, and the internal thread is threadedly connected to the external thread.

In some embodiments, the first supporting member 151 is integrally formed with the nut 141 or the first sleeve 161.

In some embodiments, the first supporting member 151, the nut 141, and the first sleeve 161 are separately machined and formed before assembly.

In the above solutions, by sleeving the nut 141 on the outer peripheral side of the first sleeve 161 and locking the protective plate 13 in cooperation with the sleeve, internal space of the sleeve can be fully utilized to implement subsequent assembly steps such as mounting the box body 11, thereby expanding the functions of the first fastener 14 and the second fastener 16, reducing the number of sealing operations during the assembly process, and reducing the risk of sealing failure of the box body 11.

According to some embodiments of the present application, referring to FIGS. 3-8, the protective plate 13 has a first surface 134 and a second surface 135 that are oppositely arranged along the thickness direction X of the protective plate, the protective plate 13 has a first through hole 136, the first through hole 136 runs through the first surface 134 and the second surface 135, and the first supporting member 151 is arranged in the first through hole 136.

Axial direction of the first through hole 136 can intersect with the thickness direction X of the protective plate.

The first through hole 136 may comprise a plurality of segments, and the plurality of segments of the first through hole 136 may have different pore sizes.

In some embodiments, the first supporting member 151 may neither exceed the first surface 134, nor exceed the second surface 135 along the thickness direction X of the protective plate.

In the above solutions, the first supporting member 151 can utilize space inside the first through hole 136, so that the electrical apparatus is more compact, which is conducive to making the battery apparatus 100 have a high energy density. In addition, the first through hole 136 can be used as an assembly basis for the first fastener 14, the second fastener 16, and the supporting member 15, which is conducive to improving the assembly efficiency.

According to some embodiments of the present application, referring to FIGS. 3-8, the protective plate 13 comprises a first fiber resin layer 131, a reinforcement layer, and a second fiber resin layer 132 sequentially stacked along the thickness direction thereof, and a first edge sealing portion 1311; along the thickness direction X of the protective plate, a surface of the first fiber resin layer 131 away from the reinforcement layer is the first surface 134, and a surface of the second fiber resin layer 132 away from the reinforcement layer is the second surface 135; the reinforcement layer has a second through hole arranged around the first through hole 136, the first edge sealing portion 1311 is annular, outer peripheral surface of the first edge sealing portion 1311 is connected to inner peripheral surface of the second through hole and connects the first fiber resin layer 131 to the second fiber resin layer 132, and the first supporting member is arranged through the first edge sealing portion 1311.

In some embodiments, the first through hole 136 comprises a first hole segment, a second hole segment, and a third hole segment that are sequentially connected, the first hole segment is located in the first fiber resin layer 131, the second hole segment is formed by the annular first edge sealing portion 1311, and the third hole segment is located in the second fiber resin layer 132.

In the above solutions, the first edge sealing portion 1311 can reduce the risk of the reinforcement layer being exposed, corroded or damaged. Since the first supporting member is arranged through the first edge sealing portion 1311, when the locking force of the first fastener is transmitted to the protective plate, the first supporting member can restrict the deformation amount of the first edge sealing portion 1311 being compressed, and reduce the risk of the protective function loss thereof caused by collapse of the first edge sealing portion 1311, thereby improving the reliability of the electrical apparatus.

According to some embodiments of the present application, material of the first edge sealing portion 1311 comprises a resin or a fiber resin.

According to some embodiments of the present application, referring to FIGS. 3-8, the first supporting member 151 is integrally formed with the nut 141.

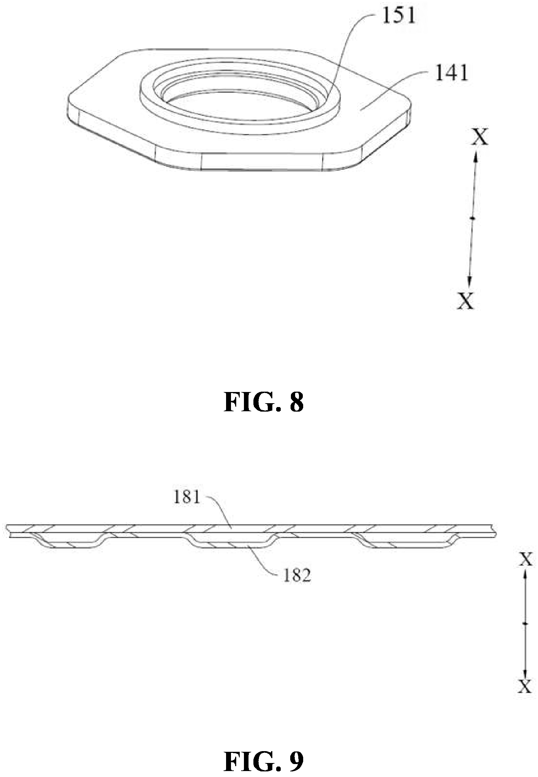

In some embodiments, referring to FIG. 8, the nut 141 comprises a top surface, a bottom surface, and an outer peripheral surface connecting the top surface to the bottom surface, and the first supporting member 151 is a boss protruding from the top surface of the nut 141. In some other embodiments, the boss may be an annular boss. Of course, the boss may comprise a plurality of segments of sub-bosses arranged at intervals along circumferential direction of the nut 141.

The first supporting member 151 may be integrally formed with the nut 141 by, e.g., machining, casting, or 3D printing.

In some embodiments, the first supporting member 151 is annular, inner diameter of the first supporting member 151 is equal to inner diameter of the nut 141, and thread of the nut 141 extends to inner circumferential surface of the first supporting member 151.

In some embodiments, the first supporting member 151 protrudes from inner circumferential surface of the nut 141 toward a sleeve body 1612 along radial direction of the nut 141, and the sleeve body 1612 is provided with an avoidance portion for avoiding the first supporting member 151.

In the above solutions, the first supporting member 151 and the nut 141 that are integrally formed can simplify the assembly process, improve the assembly efficiency, and can further reduce the risk of damaging the fiber resin layer due to excessive displacement of the first supporting member 151 in the assembly process.

According to some embodiments of the present application, referring to FIGS. 3-8, the first supporting member 151 is annular, and the inner diameter of the first supporting member 151 is larger than the inner diameter of the nut 141.

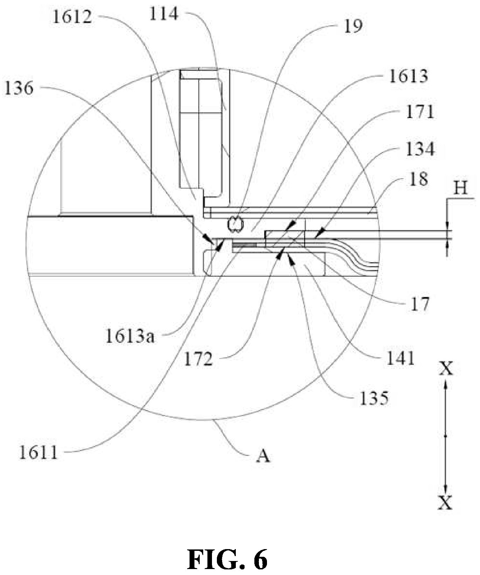

Referring to FIG. 6, because the inner diameter of the first supporting member 151 is larger than the inner diameter of the nut 141, there is a gap between the first supporting member 151 and the sleeve body 1612.

In the above solutions, the inner diameter of the first supporting member 151 is larger than the inner diameter of the nut 141, thereby improving shape consistency of the thread tail end, improving the thread machining accuracy, and reducing the risk of generating assembling clearance due to low thread machining accuracy.

According to some embodiments of the present application, referring to FIGS. 3-8, the first sleeve 161 comprises a sleeve body 1612 and a flange portion 1613, the flange portion 1613 protrudes from outer peripheral surface of the sleeve body 1612, and a part of the protective plate 13 and the first supporting member 151 are each located between the flange portion 1613 and the nut 141 along the thickness direction X of the protective plate.

In the above solutions, in the process of locking the protective plate 13, there is a large locking force between the flange portion 1613 and the nut 141, and the flange portion 1613 and the nut 141 compress the protective plate 13, thereby resulting in a high risk of damaging the fiber resin layer. The first supporting member 151 is arranged between the flange portion 1613 and the nut 141, to restrict the deformation amount of the fiber resin layer being compressed in a region with a large locking force, and further reduce the risk of damaging the fiber resin layer.

According to some embodiments of the present application, referring to FIGS. 3-8, the battery apparatus 100 further comprises a first sealing member 17, the first sealing member 17 is annular, and the first sealing member 17 is arranged between the flange portion 1613 and the protective plate 13.

Material of the first sealing member 17 may include, but is not limited to, a foaming silica gel sealing member.

In some embodiments, compression rate of the first sealing member 17 is any value that is larger than or equal to 30% and is smaller than or equal to 70%. The first sealing member 17 with a compression rate in this range can make the first sealing member 17 have both better sealing performance and better material durability.

In the above solutions, the arrangement of the first sealing member 17 can improve the sealing performance between the flange portion 1613 and the protective plate 13.

According to some embodiments of the present application, referring to FIGS. 3-8, the flange portion 1613 has a first end surface 1613a facing the protective plate 13, the first end surface 1613a is provided with a first groove 1613b, and the first sealing member 17 is arranged in the first groove 1613b.

In some embodiments, the first groove 1613b is spaced apart from outer peripheral surface of the flange portion 1613.

In the above solutions, the first groove 1613b can restrict the deformation of the first sealing member 17, which is conducive to enabling the first sealing member 17 to have sufficient compression amount after assembly, to provide high sealing performance between the flange portion 1613 and the protective plate 13.

According to some embodiments of the present application, referring to FIGS. 3-8, the first groove 1613b extends to the outer peripheral surface of the flange portion 1613.

The first groove 1613b can be machined by, e.g., milling, and is enabled to extend to the outer peripheral surface of the flange portion 1613.

The first groove 1613b extends to the outer peripheral surface of the flange portion 1613, which means that the first groove 1613b can make as much use of the inherent space of the flange portion 1613 as possible to place the first sealing member 17 with a larger sealing width.

In the above solutions, since the first groove 1613b extends to the outer peripheral surface of the flange portion 1613, the first groove 1613b can have a larger accommodating space to accommodate the first sealing member 17, which is conducive to arrangement of a first sealing member 17 with a larger width, thereby further improving the sealing performance between the flange portion 1613 and the protective plate 13. When the first sealing member 17 is located between the fiber resin layer and the flange portion 1613, the first sealing member 17 with a wider sealing width can significantly reduce the risk of sealing failure caused by high surface roughness of the fiber resin layer.

According to some embodiments of the present application, referring to FIGS. 3-8, depth of the first groove 1613b is H, satisfying: 1 mm≤H≤3 mm.

The depth of the first groove 1613b may be any value that is larger than or equal to 1 mm and is smaller than or equal to 3 mm, for example, any one point value of, or a range value between any two of, 1 mm, 1.2 mm, 1.4 mm, 1.6 mm, 1.8 mm, 2 mm, 2.2 mm, 2.4 mm, 2.6 mm, 2.8 mm, 3 mm, etc.

In the above solutions, when H≥1 mm, the first groove 1613b has a larger depth, which can reduce the risk of damaging the first sealing member 17 due to excessive compression; when H≤3 mm, the first groove 1613b has a smaller depth, which can reduce the risk of sealing failure caused by failure to form sufficient compression deformation of the first sealing member 17; and therefore, 1 mm≤H≤3 mm not only reduces the risk of damaging the first sealing member 17 due to excessive compression, but also can reduce the risk of sealing failure caused by failure to form sufficient compression deformation of the first sealing member 17.

According to some embodiments of the present application, referring to FIGS. 3-8, outer diameter of the first sealing member 17 is D₁, and inner diameter of the first sealing member 17 is D₂, satisfying: $5 mm \leq \frac{{D}_{1} - {D}_{2}}{2} \leq 12 mm$.

Half of the difference between the outer diameter of the first sealing member 17 and the inner diameter of the first sealing member 17 may be any value that is larger than or equal to 5 mm and is smaller than or equal to 12 mm, for example, any one point value of, or a range value between any two of, 5 mm, 5.2 mm, 5.4 mm, 5.6 mm, 5.8 mm, 6 mm, 6.2 mm, 6.4 mm, 6.6 mm, 6.8 mm, 7 mm, 7.2 mm, 7.4 mm, 7.6 mm, 7.8 mm, 8 mm, 8.2 mm, 8.4 mm, 8.6 mm, 8.8 mm, 9 mm, 9.2 mm, 9.4 mm, 9.6 mm, 9.8 mm, 10 mm, 10.2 mm, 10.4 mm, 10.6 mm, 10.8 mm, 11 mm, 11.2 mm, 11.4 mm, 11.6 mm, 11.8 mm, 12 m, etc.

In the above solutions, $\frac{{D}_{1} - {D}_{2}}{2} \geq 5 mm$ can enable the first sealing member 17 to have a higher sealing width, and improve the sealing performance between the flange portion 1613 and the protective plate 13; $\frac{{D}_{1} - {D}_{2}}{2} \leq 12 mm$ can reduce friction area of the first sealing member 17, and reduce the risk of fatigue failure of the first sealing member 17; and therefore, $5 mm \leq \frac{{D}_{1} - {D}_{2}}{2} \leq 12 mm$ not only improves the sealing performance between the flange portion 1613 and the protective plate 13, but also can reduce the friction area of the first sealing member 17, and reduce the risk of fatigue failure of the first sealing member 17.

According to some embodiments of the present application, referring to FIGS. 3-8, the first sealing member 17 has a third surface 171 in contact with the flange portion 1613 and a fourth surface 172 in contact with the protective plate 13, and when the first sealing member 17 is in a natural state, the third surface 171 and the fourth surface 172 are each a plane.

The fiber resin layer usually has a relatively high surface roughness, and the third surface 171 and the fourth surface 172 are each a plane, so that a small force is required to enable the first sealing member 17 to have a highly tight fitting. In other words, a small force can be used to seal the gap between the flange portion 1613 and the protective plate 13 with the first sealing member 17, and enable the flange portion 1613 and the protective plate 13 to have a high sealing performance.

In the above solutions, the third surface 171 and the fourth surface 172 are each a plane when the first sealing member 17 is in the natural state, which can reduce the pressure required to enable the sealing surface of the first sealing member 17 to have sufficiently tight fitting, thereby reducing the risk of damaging the fiber resin layer due to excessive compression when an excessively large force is transmitted to the protective plate 13.

According to some embodiments of the present application, compression rate of the first sealing member 17 is Yb, satisfying: 30%≤Yb≤70%.

The compression rate of the first sealing member 17 may be any value that is larger than or equal to 30% and is smaller than or equal to 70%, for example, any one point value of, or a range value between any two of, 30%, 35%, 40%, 45%, 50%, 55%, 60%, 65%, 70%, etc.

In the above solutions, Yb≥30% achieves highly tight fitting of the first sealing member 17 and better sealing performance between the flange portion 1613 and the protective plate 13; Yb≤70% can reduce the risk of collapsing the first sealing member 17; and therefore, 30%≤Yb≤70% can further reduce the risk of collapsing the first sealing member 17 while achieving better sealing performance between the flange portion 1613 and the protective plate 13.

According to some embodiments of the present application, referring to FIGS. 3-8, the box body 11 further comprises a thermal management component 18, wherein the thermal management component 18 is configured to carry the battery cell 12; along the thickness direction X of the protective plate, the protective plate 13 is located on one side of the thermal management component 18 away from the battery cell 12, and the flange portion 1613 is located between the protective plate 13 and the thermal management component 18; and the battery apparatus 100 further comprises a second sealing member 19, wherein the second sealing member 19 is annular, and the second sealing member 19 is arranged between the flange portion 1613 and the thermal management component 18. The inner diameter of the first sealing member 17 is larger than outer diameter of the second sealing member 19.

Referring to FIG. 9, in some embodiments, the thermal management component 18 may comprise a first plate body 181 and a second plate body 182 that are stacked, and a surface of the second plate body 182 facing the first plate body 181 is provided with a concave portion accommodating a heat transfer medium for adjusting temperature of the battery cell 12.

In some embodiments, the second sealing member 19 comprises an annular main body, and at least one sealing lip is provided on at least one side surface along axial direction of the main body.

Material of the second sealing member 19 may include, but is not limited to, a rubber, a silica gel, or the like.

In some embodiments, referring to FIG. 6, in the given projection plane perpendicular to the thickness direction X of the protective plate, orthographic projection of the first sealing member 17 surrounds orthographic projection of the second sealing member 19, and the orthographic projection of the first sealing member 17 is spaced apart from the orthographic projection of the second sealing member 19.

In the above solutions, the arrangement of the second sealing member 19 can improve the sealing performance between the flange portion 1613 and the thermal management component 18. Since the inner diameter of the first sealing member 17 is larger than the outer diameter of the second sealing member 19, the first sealing member 17 is farther away from the first fastener 14, and the first sealing member 17 can be set to have a larger sealing width, which is conducive to further improving the sealing performance between the flange portion 1613 and the protective plate 13. In particular, under the premise that the orthographic projection of the first sealing member 17 does not overlap with the orthographic projection of the second sealing member 19 along the thickness direction X of the protective plate, such a setting can enable the first sealing member 17 to be set to have a sealing width as large as possible.

According to some embodiments of the present application, referring to FIGS. 3-8, neither the nut 141 nor the first sleeve 161 exceeds a surface of the protective plate 13 away from the battery cell 12 along the thickness direction X of the protective plate.

Along the thickness direction X of the protective plate, neither the nut 141 nor the first sleeve 161 exceeds the surface of the protective plate 13 away from the battery cell 12, which means that a foreign matter such as a gravel outside the battery apparatus 100 can hardly directly impact the nut 141 and the first sleeve 161, thereby resulting in occurrence of a risk such as structural deformation or thread damage to the nut 141 or the first sleeve 161.

In the above solutions, since along the thickness direction X of the protective plate, neither the nut 141 nor the first sleeve 161 exceeds the surface of the protective plate 13 away from the battery cell 12, and a low risk of locking failure is caused by the nut 141 and the first sleeve 161 being subjected to an external force.

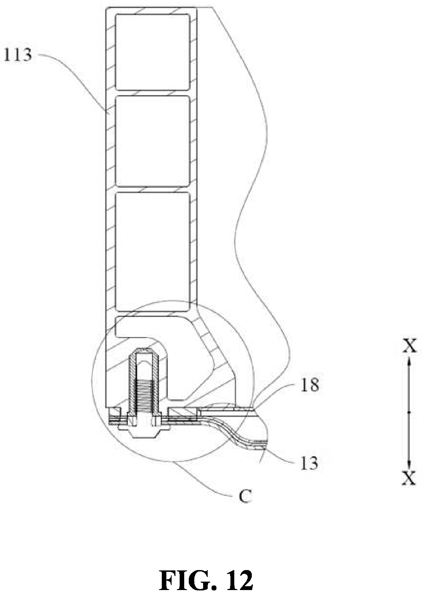

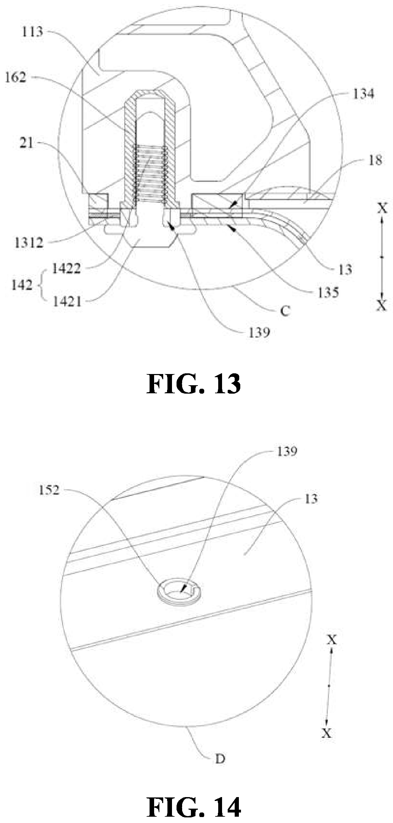

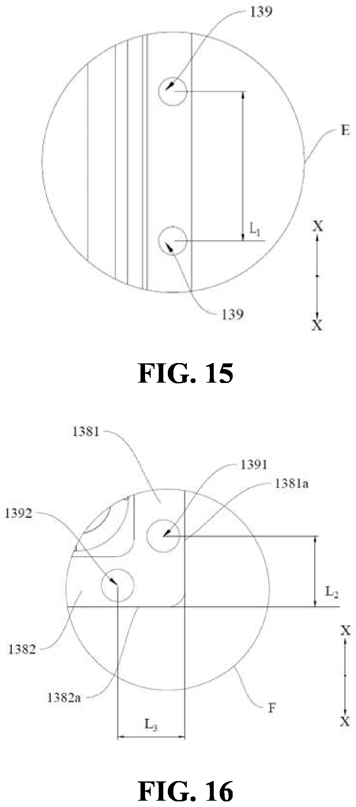

According to some embodiments of the present application, referring to FIGS. 12-16, the box body 11 comprises a frame 113; the protective plate 13 comprises a body 137 and a flange edge 138, the flange edge 138 is arranged around the body 137, the first fastener 14 comprises a first screw 142, the first screw 142 connects the flange edge 138 to the frame 113, the supporting member 15 comprises a second supporting member 152, and the second supporting member 152 is arranged between the flange edge 138 and the frame 113.

In some embodiments, the first fastener 14 comprises a first screw 142, the second fastener 16 comprises a threaded sleeve 162, the threaded sleeve 162 is threadedly connected to the first screw 142, at least a part of the threaded sleeve 162 is arranged in the frame 113; the supporting member 15 comprises a second supporting member 152, and the second supporting member 152 is arranged between the first screw 142 and the threaded sleeve 162.

The threaded sleeve 162 may be arranged in the frame 113 by, e.g., welding, threaded connection, or snap fit.

In some embodiments, the second supporting member 152 is integrally formed with one of the screw or the threaded sleeve 162.

In the above solutions, when a locking force of the first screw 142 is transmitted to the protective plate 13, the second supporting member 152 can restrict deformation amount of the fiber resin layer being compressed, reduce the risk of the matrix cracking or fiber breakage due to excessive compression of the fiber resin layer, and reduce the risk of the protective function loss of the protective plate caused by the fiber resin layer collapse, thereby improving the reliability of the battery apparatus 100.

According to some embodiments of the present application, referring to FIGS. 12-16, the first screw 142 comprises a nut cap 1421 and a screw rod 1422, the second supporting member 152 is sleeved on outer peripheral side of the screw rod 1422, and the second supporting member 152 is located between the nut cap 1421 and the frame 113 along the thickness direction X of the protective plate.

In some embodiments, the second supporting member 152 is located between the nut cap 1421 and the frame 113 along the thickness direction X of the protective plate, which can be understood as that the second supporting member 152 is located between the surface of the nut cap 1421 facing the frame 113 and the surface of the frame 113 facing the nut cap 1421 along the thickness direction X of the protective plate.

In some embodiments, the shape of the second supporting member 152 may be an O-shaped ring.

In the above solutions, in the process of locking the protective plate 13, there is a large locking force between the nut cap 1421 and the frame 113, and the nut cap 1421 and the frame 113 compress the protective plate 13, thereby resulting in a high risk of damaging the fiber resin layer. The first supporting member 151 is arranged between the nut cap 1421 and the frame 113, to restrict the deformation amount of the fiber resin layer being compressed in a region with a large locking force, and further reduce the risk of damaging the fiber resin layer.

According to some embodiments of the present application, referring to FIGS. 12-16, the protective plate 13 has a first surface 134 and a second surface 135 that are oppositely arranged along the thickness direction X of the protective plate, the protective plate 13 has a third through hole 139, the third through hole 139 runs through the first surface 134 and the second surface 135, and the second supporting member 152 is arranged in the third through hole 139.

Axial direction of the third through hole 139 can intersect with the thickness direction X of the protective plate.

The third through hole 139 may comprise a plurality of segments, and the plurality of segments of the first through hole 136 may have different pore sizes.

In the above solutions, the second supporting member 152 can utilize space inside the third through hole 139, so that the electrical apparatus is more compact, which is conducive to making the battery apparatus 100 have a high energy density. In addition, the third through hole 139 can be used as an assembly basis for the first fastener 14, the second fastener 16, and the second supporting member 152, which is conducive to improving the assembly efficiency of the battery apparatus 100. According to some embodiments of the present application, referring to FIGS. 12-16, the second supporting member 152 is an open ring.

The second supporting member 152 is an open ring, which means that the second supporting member 152 can expand or contract to a certain extent.

In the above solutions, since the second supporting member 152 is an open ring and is a flexible structure, the open ring can expand or contract in the process of locking the first screw 142, to scatter certain locking force, thereby further reducing the risk of damaging the fiber resin layer.

According to some embodiments of the present application, referring to FIGS. 12-16, thickness of the open ring is larger than the thickness of the protective plate 13 in the thickness direction X of the protective plate.

In the above solutions, the thickness of the open ring being larger than the thickness of the protective plate 13 can further reduce the risk of damaging the fiber resin layer.

According to some embodiments of the present application, referring to FIGS. 12-16, the battery apparatus 100 further comprises a third sealing member 21, and the third sealing member 21 is arranged between the flange edge 138 and the box body 11.

Material of the third sealing member 21 may include, but is not limited to, a rubber, a silica gel, or the like.

In some embodiments, the third sealing member 21 may be a frame-shaped structure.

In some embodiments, the box body 11 comprises a frame 113, and the third sealing member 21 is arranged between the frame 113 and the protective plate 13.

In some embodiments, along the thickness direction X of the protective plate, the body 137 protrudes toward one side away from the battery cell 12, the body 137 forms a concave portion on one side facing the battery cell 12, and the body 137 forms a concave portion on one side away from the battery cell 12.

In the above solutions, the arrangement of the third sealing member 21 can improve the sealing performance between the flange edge 138 and the box body 11.

According to some embodiments of the present application, referring to FIGS. 12-16, a plurality of the third through holes 139 are arranged, the plurality of third through holes 139 are arranged at intervals along circumferential direction of the flange edge 138, and a distance between two adjacent third through holes 139 is L₁, satisfying: 70 mm≤L₁≤90 mm.

The distance between two adjacent third through holes 139 may be any value that is larger than or equal to 70 mm and is smaller than or equal to 90 mm, for example, any one point value of, or a range value between any two of, 70 mm, 72 mm, 74 mm, 76 mm, 78 mm, 80 mm, 82 mm, 84 mm, 86 mm, 88 mm, 90 mm, etc.

In the above solutions, when L₁≥70 mm, there is large spacing between two adjacent third through holes 139, which can reduce the risk of collapsing the third sealing member 21 due to excessively large compressive stress; when L₁≤90 mm, there is small spacing between two adjacent third through holes 139, which can reduce the risk of sealing failure caused by warping of the third sealing member 21; and therefore, 70 mm≤L₁≤90 mm not only reduces the risk of collapsing the third sealing member 21 caused by excessively large compressive stress, but also can reduce the risk of sealing failure caused by warping of the third sealing member 21.

According to some embodiments of the present application, referring to FIGS. 12-16, the flange edge 138 comprises a first sub-flange edge 1381 and a second sub-flange edge 1382 that are adjacent, the first sub-flange edge 1381 has a first outer edge 1381a, and the second sub-flange edge 1382 has a second outer edge 1382a; the plurality of third through holes 139 are arranged, the plurality of third through holes 139 comprise a plurality of first sub-through holes 1391 arranged on the first sub-flange edge 1381 and a plurality of second sub-through holes 1392 arranged on the second sub-flange edge 1382; a distance between one of the plurality of first sub-through holes 1391 closest to the second outer edge 1382a and the second outer edge 1382a is L₂, satisfying: 20 mm≤L₂≤35 mm; and a distance between one of the plurality of second sub-through holes1392 closest to the first outer edge 1381a and the first outer edge 1381a is L₃, satisfying: 20 mm≤L₃≤35 mm.

The distance between the one of the plurality of first sub-through holes 1391 closest to the second outer edge 1382a and the second outer edge 1382a may be any value that is larger than or equal to 20 mm and is smaller than or equal to 35 mm, for example, any one point value of, or a range value between any two of, 20 mm, 22 mm, 24 mm, 26 mm, 28 mm, 30 mm, 31 mm, 32 mm, 33 mm, 34 mm, 35 mm, etc.

The distance between the one of the plurality of second sub-through holes 1392 closest to the first outer edge 1381a and the first outer edge 1381a may be any value that is larger than or equal to 20 mm and is smaller than or equal to 35 mm, for example, any one point value of, or a range value between any two of, 20 mm, 22 mm, 24 mm, 26 mm, 28 mm, 30 mm, 31 mm, 32 mm, 33 mm, 34 mm, 35 mm, etc.

In the above solutions, when L₂≥20 mm, there is a large distance between the one of the plurality of first sub-through holes 1391 closest to the second outer edge 1382a and the second outer edge 1382a, so that a third sealing member 21 with a large area can be arranged between the one of the plurality of first sub-through holes 1391 closest to the second outer edge 1382a and the second outer edge 1382a, thereby reducing the risk of collapsing the third sealing member 21 after being locked because the third sealing member is set to have a small area; when L₂≤35 mm, there is a small distance between the one of the plurality of first sub-through holes 1391 closest to the second outer edge 1382a and the second outer edge 1382a, thereby reducing the risk of warping of the third sealing member 21 with a large distance between the one of the plurality of first sub-through holes 1391 closest to the second outer edge 1382a and the second outer edge 1382a; and therefore, 20 mm≤L₂≤35 mm not only reduces the risk of collapsing the third sealing member 21 after being locked because the third sealing member is set to have a small area, but also can reduce the risk of warping of the third sealing member 21 with a large distance between the one of the plurality of first sub-through holes 1391 closest to the second outer edge 1382a and the second outer edge 1382a.

When L₃≥20 mm, there is a large distance between the one of the plurality of second sub-through holes 1392 closest to the first outer edge 1381a and the first outer edge 1381a, so that a third sealing member 21 with a large area can be arranged between the one of the plurality of second sub-through holes 1392 closest to the first outer edge 1381a and the first outer edge 1381a, thereby reducing the risk of collapsing the third sealing member 21 after being locked because the third sealing member is set to have a small area; when L₂≤35 mm, there is a small distance between the one of the plurality of second sub-through holes 1392 closest to the first outer edge 1381a and the first outer edge 1381a, thereby reducing the risk of warping of the third sealing member 21 with a large distance between the one of the plurality of second sub-through holes 1392 closest to the first outer edge 1381a and the first outer edge 1381a; and therefore, 20 mm≤L₂≤35 mm not only reduces the risk of collapsing the third sealing member 21 after being locked because the third sealing member is set to have a small area, but also can reduce the risk of warping of the third sealing member 21 with a large distance between the one of the plurality of second sub-through holes 1392 closest to the first outer edge 1381a and the first outer edge 1381a.

According to some embodiments of the present application, referring to FIGS. 12-16, the third sealing member 21 is annular, the third sealing member 21 is provided with a third through hole for the first screw 142 to run through, and a minimum distance between the third through hole and inner circumferential surface of the third sealing member 21 is W, satisfying: 7 mm≤W≤10 mm.

The minimum distance between the third through hole and the inner circumferential surface of the third sealing member 21 may be any value that is larger than or equal to 7 mm and is smaller than or equal to 10 mm, for example, any one point value of, or a range value between any two of, 7 mm, 7.2 mm, 7.4 mm, 7.6 mm, 7.8 mm, 8 mm, 8.2 mm, 8.4 mm, 8.6 mm, 8.8 mm, 9 mm, 9.2 mm, 9.4 mm, 9.6 mm, 9.8 mm, 10 mm, etc.

In the above solutions, when W≥7 mm, the third sealing member 21 has a large sealing width, which can reduce the risk of sealing failure; when W≤10 mm, the third sealing member 21 occupies a small space, which is conducive to making the battery apparatus 100 have a high energy density; and therefore, when 7 mm≤W≤10 mm, the battery apparatus 100 can have both high sealing performance and a high energy density.

According to some embodiments of the present application, referring to FIGS. 12-16, the first fastener 14 comprises a first screw 142, the battery apparatus 100 further comprises a second fastener 16, the second fastener 16 comprises a threaded sleeve 162, the threaded sleeve 162 is threadedly connected to the first screw 142, at least a part of the threaded sleeve 162 is arranged in the frame 113; the supporting member 15 comprises a second supporting member 152, and the second supporting member 152 is arranged between the first screw 142 and the threaded sleeve 162.

In the above solutions, by locking the protective plate 13 through cooperation of the threaded sleeve 162 and the first screw 142 at least partially arranged in the frame 113, the locking force can be more uniformly transmitted to the frame 113 through the threaded sleeve 162, thereby reducing the risk of locking failure caused by stress concentration.

According to some embodiments of the present application, referring to FIGS. 12-16, the protective plate 13 comprises the first fiber resin layer 131, the reinforcement layer, and the second fiber resin layer 132 sequentially stacked along the thickness direction thereof, and a second edge sealing portion 1312; wherein the reinforcement layer has a fifth surface and a sixth surface that are opposite along thickness direction thereof and an outer peripheral surface connecting the fifth surface to the sixth surface, the second edge sealing portion 1312 is cladded on the outer peripheral surface of the reinforcement layer and connects the first fiber resin layer 131 to the second fiber resin layer 132, and the second supporting member 152 is arranged through the second edge sealing portion 1312.

In some embodiments, the third through hole 139 comprises a fourth hole segment, a fifth hole segment, and a sixth hole segment, the fourth hole segment is located in the first fiber resin layer 131, the fifth hole segment is located in the second edge sealing portion 1312, and the sixth hole segment is located in the second fiber resin layer.

In the above solutions, the second edge sealing portion 1312 can reduce the risk of the reinforcement layer being exposed, corroded or damaged. Since the second supporting member 152 is arranged through the second edge sealing portion 1312, when the locking force of the first fastener 14 is transmitted to the protective plate 13, the second supporting member 152 can restrict the deformation amount of the second edge sealing portion 1312 being compressed, and reduce the risk of the protective function loss thereof caused by collapse of the second edge sealing portion 1312, thereby improving the reliability of the battery apparatus 100.

According to some embodiments of the present application, material of the second edge sealing portion 1312 comprises a resin or a fiber resin.

According to some embodiments of the present application, material of the reinforcement layer comprises at least one of steel, titanium, ceramic, and high-strength plastic.

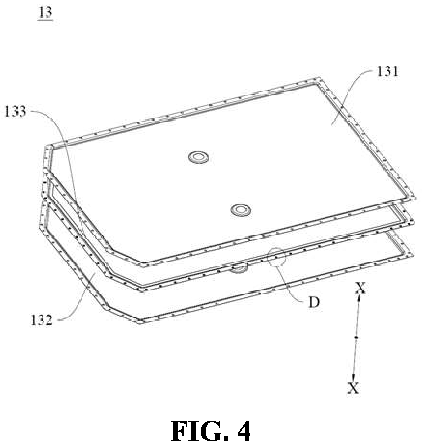

According to some embodiments of the present application, referring to FIGS. 4-17, the box body 11 comprises a frame 113 and a beam body 114, the beam body 114 is arranged in the frame 113 and connected to the frame 113, the protective plate 13 comprises a body 137 and a flange edge 138, the flange edge 138 is arranged around the body 137; the first fastener 14 comprises a nut 141 and a first screw 142, the battery apparatus 100 further comprises a second fastener 16, the second fastener 16 comprises a first sleeve 161 and a threaded sleeve 162; at least a part of the first sleeve 161 is arranged in the beam body 114, the nut 141 is sleeved on outer peripheral side of the first sleeve 161 and threadedly connected to the first sleeve 161; at least a part of the threaded sleeve 162 is arranged in the frame 113, the threaded sleeve 162 is threadedly connected to the first screw 142; the supporting member 15 comprises a first supporting member 151 and a second supporting member 152, the first supporting member 151 is arranged between the nut 141 and the first sleeve 161, and the second supporting member 152 is arranged between the flange edge 138 and the frame 113.

In the above solutions, when a locking force of the nut 141 is transmitted to the protective plate 13, and a locking force of the first screw 142 is transmitted to the protective plate 13, the first supporting member 151 and the second supporting member 152 can restrict deformation amount of the fiber resin layer being compressed, reduce the risk of the matrix cracking or fiber breakage due to excessive compression of the fiber resin layer, and reduce the risk of the protective function loss of the protective plate 13 caused by the fiber resin layer collapse, thereby improving the reliability of the battery apparatus 100.

According to some embodiments of the present application, referring to FIG. 1, the present application provides an electrical apparatus, comprising the battery apparatus 100 in one or more of the above embodiments. The battery apparatus 100 is configured to provide electric energy.

In the above solutions, since the battery apparatus 100 in one or more of the above embodiments has high reliability, the electrical apparatus comprising the battery apparatus 100 in one or more of the above embodiments also has high reliability.

According to some embodiments of the present application, referring to FIGS. 3-17, the present application provides a battery apparatus 100. The battery apparatus 100 comprises a box body 11, a battery cell 12, a protective plate 13, a first fastener 14, a second fastener 16, a first sealing member 17, a second sealing member 19, and a third sealing member 21.

The box body 11 comprises a frame 113, a thermal management component 18, and a cover body. Along the thickness direction X of the protective plate, the box body 11 has two oppositely arranged openings, the cover body closes one of the openings, and the thermal management component 18 closes the other opening. The frame 113 is arranged around the protective plate 13. The protective plate 13 is arranged at bottom of the box body 11 along the gravity direction, and the battery cell 12 is arranged in the box body 11. The thermal management component 18 is configured to carry the battery cell 12. Both sides of the protective plate 13 along the thickness direction thereof are fiber resin layers. The first fastener 14 is configured to lock the protective plate 13 to the box body 11 and clamp a part of the protective plate 13 between the box body 11 and the first fastener 14 along the thickness direction X of the protective plate.

The supporting member 15 is arranged between the first fastener 14 and the second fastener 16 along the thickness direction X of the protective plate.

Referring to FIGS. 3-8 and 17, the box body 11 further comprises a frame 113 and a beam body 114, and the beam body 114 is arranged in the frame 113 and connected to the frame 113. The beam body 114 can be referred to as a middle mounting beam of the battery apparatus 100. The first fastener 14 comprises a nut 141, the second fastener 16 comprises a first sleeve 161, at least a part of the first sleeve 161 is arranged in the beam body 114, and the nut 141 is sleeved on outer peripheral side of the first sleeve 161 and threadedly connected to the first sleeve 161. The supporting member 15 comprises a first supporting member 151, and the first supporting member 151 is arranged between the nut 141 and the first sleeve 161. The protective plate 13 has a first surface 134 and a second surface 135 that are oppositely arranged along the thickness direction X of the protective plate, the protective plate 13 has a first through hole 136, the first through hole 136 runs through the first surface 134 and the second surface 135, and the first supporting member 151 is arranged in the first through hole 136. The first supporting member 151 is integrally formed with the nut 141. The first supporting member 151 is annular, and the inner diameter of the first supporting member 151 is larger than the inner diameter of the nut 141. The first sleeve 161 comprises a sleeve body 1612 and a flange portion 1613, the flange portion 1613 protrudes from outer peripheral surface of the sleeve body 1612, and a part of the protective plate 13 and the first supporting member 151 are each located between the flange portion 1613 and the nut 141 along the thickness direction X of the protective plate. The first sealing member 17 is annular, and the first sealing member 17 is arranged between the flange portion 1613 and the protective plate 13. The flange portion 1613 has a first end surface 1613a facing the protective plate 13, the first end surface 1613a is provided with a first groove 1613b, and the first sealing member 17 is arranged in the first groove 1613b. The first groove 1613b extends to the outer peripheral surface of the flange portion 1613. The first sealing member 17 has a third surface 171 in contact with the flange portion 1613 and a fourth surface 172 in contact with the protective plate 13, and when the first sealing member 17 is in a natural state, the third surface 171 and the fourth surface 172 are each a plane. The thermal management component 18 is configured to carry the battery cell 12; along the thickness direction X of the protective plate, the protective plate 13 is located on one side of the thermal management component 18 away from the battery cell 12, and the flange portion 1613 is located between the protective plate 13 and the thermal management component 18; the second sealing member 19 is annular, and the second sealing member 19 is arranged between the flange portion 1613 and the thermal management component 18. The inner diameter of the first sealing member 17 is larger than outer diameter of the second sealing member 19. Neither the nut 141 nor the first sleeve 161 exceeds a surface of the protective plate 13 away from the battery cell 12 along the thickness direction X of the protective plate.

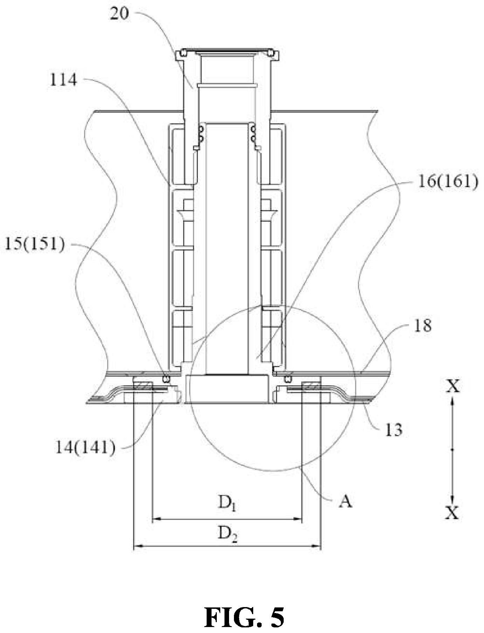

Referring to FIG. 5, the battery apparatus 100 further comprises a second sleeve 20, the second sleeve 20 is threadedly connected to the first sleeve 161, the second sleeve 20 is sleeved on the outer peripheral side of the first sleeve 161, and the second sleeve 20 is located at one end of the first sleeve 161 away from the nut 141. One end of the second sleeve 20 protrudes from the cover body. Axial channels of the first sleeve 161, the second sleeve 20, and the nut 141 are connected, so that a mounting member for mounting with the electrical apparatus can run through the battery apparatus 100 through the above connected axial channels.

The box body 11 comprises a frame 113; the first fastener 14 comprises a first screw 142, the second fastener 16 comprises a threaded sleeve 162, the threaded sleeve 162 is threadedly connected to the first screw 142, at least a part of the threaded sleeve 162 is arranged in the frame 113; the supporting member 15 comprises a second supporting member 152, and the second supporting member 152 is arranged between the first screw 142 and the threaded sleeve 162. The first screw 142 comprises a nut cap 1421 and a screw rod 1422, the second supporting member 152 is sleeved on outer peripheral side of the screw rod 1422, and the second supporting member 152 is located between the nut cap 1421 and the frame 113 along the thickness direction X of the protective plate. The second supporting member 152 is an open ring. The protective plate 13 comprises a body 137 and a flange edge 138, the flange edge 138 is arranged around the body 137, the first screw 142 connects the flange edge 138 to the frame 113; and the third sealing member 21 is arranged between the flange edge 138 and the box body 11. The protective plate 13 has a first surface 134 and a second surface 135 that are oppositely arranged along the thickness direction X of the protective plate, the protective plate 13 has a third through hole 139, the third through hole 139 runs through the first surface 134 and the second surface 135, and the second supporting member 152 is arranged in the third through hole 139.

Finally, it should be noted that: the above embodiments are merely used to illustrate the technical solutions of the present application, instead of imposing any limitation on the present application. Although the present application has been described in detail with reference to the above embodiments, those with ordinary skills in the art should understand that: the technical solutions disclosed in the above embodiments may be modified, or a part or all of the technical features thereof may be replaced equivalently. These modifications and replacements are not intended to make the essence of corresponding technical solutions depart from the scope of the technical solutions of the embodiments of the present application, and should be encompassed within the scope of the claims and specification of the present application. In particular, the technical features mentioned in the various embodiments can be combined in any manner as long as there is no structural conflict. The present application is not limited to the particular Examples disclosed herein, but rather includes all technical solutions falling within the scope of the claims.

## Claims

1. A battery apparatus, comprising:
a box body;
a battery cell arranged in the box body;
a protective plate arranged at bottom of the battery cell, with at least one side of the protective plate along thickness direction thereof being a fiber resin layer; and
a first fastener configured to lock the protective plate to the box body, wherein a part of the protective plate is clamped between the box body and the first fastener along the thickness direction of the protective plate;
wherein a supporting member is further arranged between the box body and the first fastener along the thickness direction of the protective plate, and orthographic projection of the supporting member does not overlap with orthographic projection of the protective plate in a given projection plane perpendicular to the thickness direction of the protective plate.

2. The battery apparatus according to claim 1, wherein the battery apparatus further comprises a second fastener fixed to the box body and threadedly connected to the first fastener.

3. The battery apparatus according to claim 2, wherein the supporting member is arranged between the first fastener and the second fastener along the thickness direction of the protective plate.

4. The battery apparatus according to claim 2, wherein the box body comprises a frame and a beam body, the beam body is arranged in the frame and connected to the frame;
the first fastener comprises a nut, the second fastener comprises a first sleeve, at least a part of the first sleeve is arranged in the beam body, the nut is sleeved on outer peripheral side of the first sleeve and threadedly connected to the first sleeve; and
the supporting member comprises a first supporting member arranged between the nut and the first sleeve.

5. The battery apparatus according to claim 4, wherein the protective plate has a first surface and a second surface that are oppositely arranged along the thickness direction of the protective plate, the protective plate has a first through hole, the first through hole runs through the first surface and the second surface, and the first supporting member is arranged in the first through hole.

6. The battery apparatus according to claim 5, wherein the protective plate comprises a first fiber resin layer, a reinforcement layer, and a second fiber resin layer sequentially stacked along the thickness direction thereof, and a first edge sealing portion;
along the thickness direction of the protective plate, a surface of the first fiber resin layer away from the reinforcement layer is the first surface, and a surface of the second fiber resin layer away from the reinforcement layer is the second surface; and
the reinforcement layer has a second through hole arranged around the first through hole, the first edge sealing portion is annular, outer peripheral surface of the first edge sealing portion is connected to inner peripheral surface of the second through hole and connects the first fiber resin layer to the second fiber resin layer, and the first supporting member is arranged through the first edge sealing portion.

7. The battery apparatus according to claim 6, wherein material of the first edge sealing portion comprises a resin or a fiber resin.

8. The battery apparatus according to any one of claims 4 to 7, wherein the first supporting member is integrally formed with the nut.

9. The battery apparatus according to any one of claims 4 to 8, wherein the first supporting member is annular, and inner diameter of the first supporting member is larger than inner diameter of the nut.

10. The battery apparatus according to any one of claims 4 to 9, wherein the first sleeve comprises a sleeve body and a flange portion, the flange portion protrudes from outer peripheral surface of the sleeve body, and a part of the protective plate and the first supporting member are each located between the flange portion and the nut along the thickness direction of the protective plate.

11. The battery apparatus according to claim 10, wherein the battery apparatus further comprises an annular first sealing member arranged between the flange portion and the protective plate.

12. The battery apparatus according to claim 11, wherein the flange portion has a first end surface facing the protective plate and provided with a first groove, and the first sealing member is arranged in the first groove.

13. The battery apparatus according to claim 12, wherein the first groove extends to outer peripheral surface of the flange portion.

14. The battery apparatus according to claim 12 or 13, wherein depth of the first groove is H, satisfying: 1 mm≤H≤3 mm.

15. The battery apparatus according to any one of claims 11 to 14, wherein outer diameter of the first sealing member is D₁, and inner diameter of the first sealing member is D₂, satisfying: $5 mm \leq \frac{{D}_{1} - {D}_{2}}{2} \leq 12 mm$.

16. The battery apparatus according to any one of claims 11 to 15, wherein the first sealing member has a third surface in contact with the flange portion and a fourth surface in contact with the protective plate, and when the first sealing member is in a natural state, the third surface and the fourth surface are each a plane.

17. The battery apparatus according to any one of claims 11 to 16, wherein compression rate of the first sealing member is Yb, satisfying: 30%≤Yb≤70%.

18. The battery apparatus according to any one of claims 11 to 17, wherein the box body further comprises a thermal management component configured to carry the battery cell, the protective plate is located on one side of the thermal management component away from the battery cell along the thickness direction of the protective plate, the flange portion is located between the protective plate and the thermal management component; and
the battery apparatus further comprises an annular second sealing member arranged between the flange portion and the thermal management component; and the inner diameter of the first sealing member is larger than outer diameter of the second sealing member.

19. The battery apparatus according to any one of claims 4 to 18, wherein neither the nut nor the first sleeve exceeds a surface of the protective plate away from the battery cell along the thickness direction of the protective plate.

20. The battery apparatus according to any one of claims 1 to 19, wherein the box body comprises a frame, the protective plate comprises a body and a flange edge, the flange edge is arranged around the body, the first fastener comprises a first screw, the first screw connects the flange edge to the frame, the supporting member comprises a second supporting member, and the second supporting member is arranged between the flange edge and the frame.

21. The battery apparatus according to claim 20, wherein the first screw comprises a nut cap and a screw rod, the second supporting member is sleeved on outer peripheral side of the screw rod, and the second supporting member is located between the nut cap and the frame along the thickness direction of the protective plate.

22. The battery apparatus according to claim 21, wherein along the thickness direction of the protective plate, the protective plate has the first surface and the second surface that are oppositely arranged, the protective plate has a third through hole, the third through hole runs through the first surface and the second surface, and the second supporting member is arranged in the third through hole.

23. The battery apparatus according to claim 22, wherein the second supporting member is an open ring.

24. The battery apparatus according to claim 23, wherein thickness of the open ring is larger than thickness of the protective plate in the thickness direction of the protective plate.

25. The battery apparatus according to any one of claims 22 to 24, wherein the battery apparatus further comprises a third sealing member, and the third sealing member is arranged between the flange edge and the frame.

26. The battery apparatus according to any one of claims 22 to 25, wherein a plurality of the third through holes are arranged at intervals along circumferential direction of the flange edge, and a distance between two adjacent third through holes is L₁, satisfying: 70 mm≤L₁≤90 mm.

27. The battery apparatus according to any one of claims 22 to 26, wherein the flange edge comprises a first sub-flange edge and a second sub-flange edge that are adjacent, the first sub-flange edge has a first outer edge, and the second sub-flange edge has a second outer edge;
the plurality of third through holes are arranged, comprising a plurality of first sub-through holes arranged on the first sub-flange edge and a plurality of second sub-through holes arranged on the second sub-flange edge;
a distance between one of the plurality of first sub-through holes closest to the second outer edge and the second outer edge is L₂, satisfying: 20 mm≤L₂≤35 mm; and
a distance between one of the plurality of second sub-through holes closest to the first outer edge and the first outer edge is L₃, satisfying: 20 mm≤L₃≤35 mm.

28. The battery apparatus according to any one of claims 25 to 27, wherein the third sealing member is annular and is provided with a third through hole for the first screw to run through, and a minimum distance between the third through hole and inner circumferential surface of the third sealing member is W, satisfying: 7 mm≤W≤10 mm.

29. The battery apparatus according to any one of claims 20 to 28, wherein the battery apparatus further comprises a second fastener, the second fastener comprises a threaded sleeve threadedly connected to the first screw, at least a part of the threaded sleeve is arranged in the frame; and
the second supporting member is arranged between the first screw and the threaded sleeve.

30. The battery apparatus according to any one of claims 20 to 29, wherein the protective plate comprises the first fiber resin layer, the reinforcement layer, and the second fiber resin layer sequentially stacked along the thickness direction thereof, and a second edge sealing portion; wherein
the reinforcement layer has a fifth surface and a sixth surface that are opposite along thickness direction thereof and an outer peripheral surface connecting the fifth surface to the sixth surface, the second edge sealing portion is cladded on the outer peripheral surface of the reinforcement layer and connects the first fiber resin layer to the second fiber resin layer, and the second supporting member is arranged through the second edge sealing portion.

31. The battery apparatus according to claim 30, wherein material of the second edge sealing portion comprises a resin or a fiber resin.

32. The battery apparatus according to claim 6 or 30, wherein material of the reinforcement layer comprises at least one of steel, titanium, ceramic, and high-strength plastic.

33. The battery apparatus according to claim 1, wherein the box body comprises a frame and a beam body, the beam body is arranged in the frame and connected to the frame, the protective plate comprises a body and a flange edge, the flange edge is arranged around the body;
the first fastener comprises a nut and a first screw, the battery apparatus further comprises a second fastener, the second fastener comprises a first sleeve and a threaded sleeve;
at least a part of the first sleeve is arranged in the beam body, the nut is sleeved on outer peripheral side of the first sleeve and threadedly connected to the first sleeve; at least a part of the threaded sleeve is arranged in the frame, the threaded sleeve is threadedly connected to the first screw; and
the supporting member comprises a first supporting member and a second supporting member, the first supporting member is arranged between the nut and the first sleeve, and the second supporting member is arranged between the flange edge and the frame.

34. An electrical apparatus, comprising the battery apparatus according to any one of claims 1 to 33, the battery apparatus being configured to provide electric energy.
